# EUROPEAN PATENT APPLICATION

(11) **EP 4 686 112 A1**
(43) Date of publication of application: **28.01.2026**
(21) Application number: 25191738.1
(22) Date of filing: 25.07.2025
(51) Int. Cl.: H04B 7/06, H04L 5/00

(54) **SHORT TRAINING FIELD TRANSMISSION VIA DISTRIBUTED RESOURCE UNITS**

(30) Priority: 25.07.2024 US 202463675300 P
(71) Applicant: Comcast Cable Communications, LLC, Philadelphia, PA 19103 (US)
(72) Inventor: LANANTE, Leonardo Alisasis, Philadelphia, 19103 (US); KIM, Jeongki, Philadelphia, 19103 (US); DINAN, Esmael Hejazi, Philadelphia, 19103 (US); ERKUCUK, Serhat, Philadelphia, 19103 (US); BAYKAS, Tuncer, Philadelphia, 19103 (US); ZHANG, Jiayi, Philadelphia, 19103 (US)
(74) Representative: V.O.

(57) **Abstract**

A station may receive a trigger frame from an access point. The station may divide an uplink bandwidth into multiple portions (e.g., odd and even subcarriers) based on the trigger frame. The same cyclic shift diversity value may be used for: a first spatial stream with a first portion of subcarriers, and a second spatial stream using a second portion of the subcarriers, which may reduce unintentional beamforming.

## Description

### CROSS-REFERENCE TO RELATED APPLICATIONS

This application claims the benefit of U.S. Provisional Application No. 63/675,300, filed on July 25, 2024. The above referenced application is hereby incorporated by reference in its entirety.

### BACKGROUND

An access point communicates with stations. Data units are communicated between the access point and stations. Cyclic shift diversity (CSD) phase shifts are used to prevent unintentional beamforming.

### SUMMARY

The following summary presents a simplified summary of certain features. The summary is not an extensive overview and is not intended to identify key or critical elements.

An access point may communicate with one or more computing devices, such as stations, via a plurality of channels. Phase shifts may be used to prevent unintentional beamforming. Phase shift values, such as CSD values, may repeat, for example, if more than a threshold quantity of stations may be transmitting. Stations may divide uplink bandwidth into multiple portions, such as odd and even subcarriers, and each station may use a different CSD value for transmission. Using a different CSD value and separate subcarriers for transmission may provide advantages such as reduction of unintentional beamforming.

These and other features and advantages are described in greater detail below.

### BRIEF DESCRIPTION OF THE DRAWINGS

Examples of several of the various embodiments of the present disclosure are described herein with reference to the drawings.
FIG. 1 shows example wireless communication networks.
FIG. 2 shows a block diagram showing example implementations of a station (STA) and an access point (AP).
FIG. 3 shows an example of a Medium Access Control (MAC) frame format.
FIG. 4 shows an example of a Quality of Service (QoS) null frame.
FIG. 5 shows examples of a Physical Layer Protocol Data Unit (PPDU), such as a non-High Throughput (non-HT) PPDU.
FIG. 6 shows examples of a PPDU, such as a High Efficiency (HE) Single User (SU) PPDU.
FIG. 7 shows an example of a PPDU, such as an Extremely High Throughput (EHT) Multi-user (MU) PPDU.
FIG. 8 shows examples of trigger-based (TB) PPDUs.
FIG. 9 shows an example trigger frame.
FIG. 10 shows an example Common Info field.
FIG. 11 shows an example management frame.
FIG. 12 shows an example application of a trigger-based (TB) PPDU.
FIG. 13 shows an example allocation of non-distributed resource units.
FIG. 14 shows an example allocation of distributed resource units.
FIG. 15 shows an example of an operation using distributed resource units.
FIG. 16 shows example PPDUs which may be used by Ultra-High Reliability (UHR) devices.
FIG. 17 shows an example of global cyclic shift diversity (CSD) and local CSD.
FIG. 18 shows a table of cyclic shift values.
FIG. 19 shows an example of CSD for the uplink transmission of spatial streams.
FIG. 20 shows an example of global CSD.
FIG. 21 shows an example of tone distribution.
FIG. 22 shows another example of tone distribution.
FIG. 23 shows another example of tone distribution.
FIG. 24 shows another example of tone distribution.
FIG. 25 shows an example of sending spatial streams.
FIG. 26 shows an example of receiving spatial streams.
FIG. 27 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

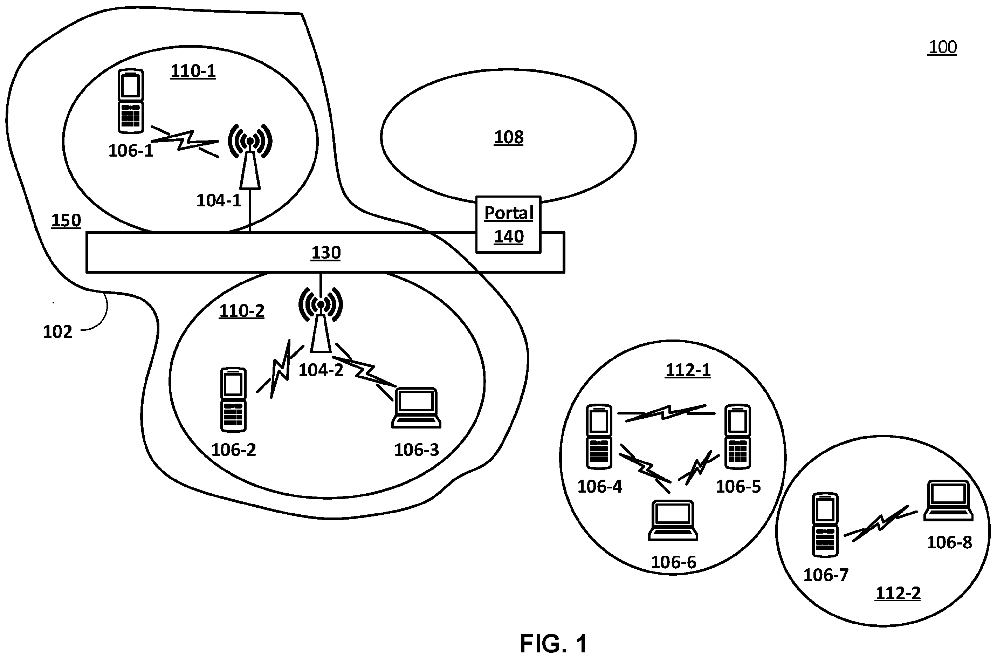

FIG. 1 shows example wireless communication network 100. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station (STA)) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks shown in FIG. 1 may further include one or more ad-hoc networks or independent BSSs (IBSSs). An ad-hoc network or IBSS may be a network that includes a plurality of STAs that are within communication range of each other. The plurality of STAs may be configured so that the plurality of STAs may communicate with each other using direct peer-to-peer communication (e.g., not via an AP).

For example, STAs 106-4, 106-5, and 106-6, in FIG. 1, may be configured to form a first IBSS 112-1. STAs 106-7 and 106-8 may be configured to form a second IBSS 112-2. An IBSS may not include a centralized management entity. The IBSS may not include a centralized management entity, for example, if an IBSS does not include an AP. STAs within an IBSS may be managed in a distributed manner. STAs forming an IBSS may be fixed or mobile.

A STA as a predetermined functional medium may include a medium access control (MAC) layer that complies with an IEEE 802.11 standard. A physical layer interface for a radio medium may be used among the APs and the non-AP stations (STAs). The STA may also be referred to using various other terms, including mobile terminal, wireless device, wireless transmit/receive unit (WTRU), user equipment (UE), mobile station (MS), mobile subscriber unit, or user. For example, the term "user" may be used to denote a STA participating in uplink Multi-user Multiple Input, Multiple Output (MU MIMO) and/or uplink Orthogonal Frequency Division Multiple Access (OFDMA) transmission.

A physical layer (PHY) protocol data unit (PPDU) may be a composite structure that includes a PHY preamble and a payload in the form of a PLCP service data unit (PSDU). For example, the PSDU may include a PHY Convergence Protocol (PLCP) preamble and header and/or one or more MAC protocol data units (MPDUs). The information provided in the PHY preamble may be used by a receiving device to decode the subsequent data in the PSDU. The preamble fields may be duplicated and sent (e.g., transmitted) in each of the multiple component channels, in instances in which PPDUs are sent (e.g., transmitted) over a bonded channel (channel formed through channel bonding). The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The information provided in, and the format and coding of the non-legacy portion of the preamble may be based on the particular IEEE 802.11 protocol to be used to send (e.g., transmit) the payload.

A frequency band may include one or more sub-bands or frequency channels. For example, PPDUs conforming to the IEEE 802.11n, 802.11ac, 802.11ax and/or 802.11be standard amendments may be sent (e.g., transmitted) over the 2.4 GHz, 5 GHz, and/or 6 GHz bands, each of which may be divided into multiple 20 MHz channels. The PPDUs may be sent (e.g., transmitted) over a physical channel having a minimum bandwidth of 20 MHz. Larger channels may be formed through channel bonding. PPDUs may be sent (e.g., transmitted) over physical channels having bandwidths of 40 MHz, 80 MHz, 160 MHz, or 520 MHz by bonding together multiple 20 MHz channels.

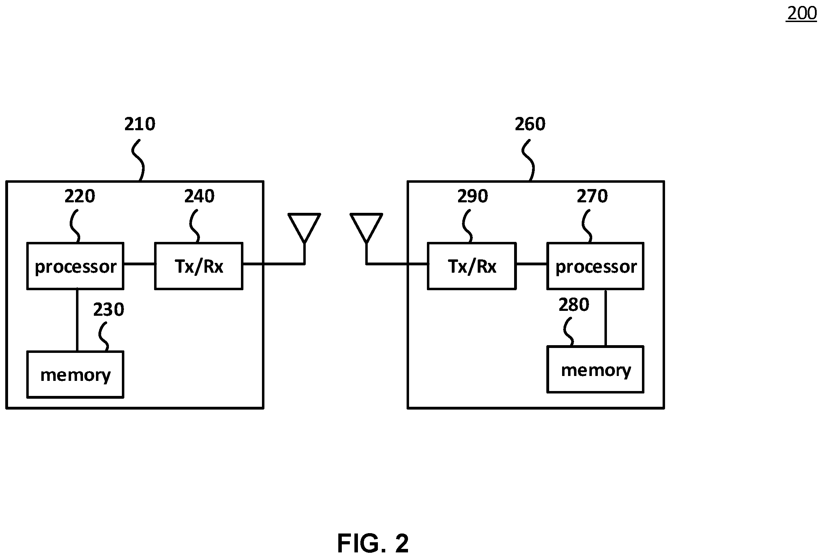

FIG. 2 is a block diagram 200 showing example implementations of a STA 210 and an AP 260. STA 210, as shown in FIG. 2, may include at least one processor 220, a memory 230, and at least one transceiver 240. AP 260 may include at least one processor 270, a memory 280, and at least one transceiver 290. Processor 220/270 may be operatively connected to memory 230/280 and/or to transceiver 240/290.

Processor 220/270 may implement functions of the PHY layer, the MAC layer, and/or the logical link control (LLC) layer of the corresponding device (STA 210 or AP 260). Processor 220/270 may include one or more processors and/or one or more controllers. The one or more processors and/or one or more controllers may comprise, for example, a general-purpose processor, a digital signal processor (DSP), a microcontroller, an application specific integrated circuit (ASIC), a field programmable gate array (FPGA), a logic circuit, or a chipset.

Memory 230/280 may include a read-only memory (ROM), a random-access memory (RAM), a flash memory, a memory card, a storage medium, and/or other storage unit. Memory 230/280 may comprise one or more non-transitory computer readable mediums. Memory 230/280 may store computer program instructions or code that may be executed by processor 220/270 to carry out one or more of the operations discussed in the present application. Memory 230/280 may be implemented (or positioned) within processor 220/270 or external to processor 220/270. Memory 230/280 may be operatively connected to processor 220/270 via various means known in the art.

Transceiver 240/290 may be configured to send/transmit/receive radio signals. The transceiver 240/290 may implement a PHY layer of the corresponding device (STA 210 or AP 260). STA 210 and/or AP 260 may be a multi-link device (MLD), that is a device capable of operating over multiple links as defined by the IEEE 802.11 standard. STA 210 and/or AP 260 may each implement multiple PHY layers. The multiple PHY layers may be implemented using one or more of transceivers 240/290.

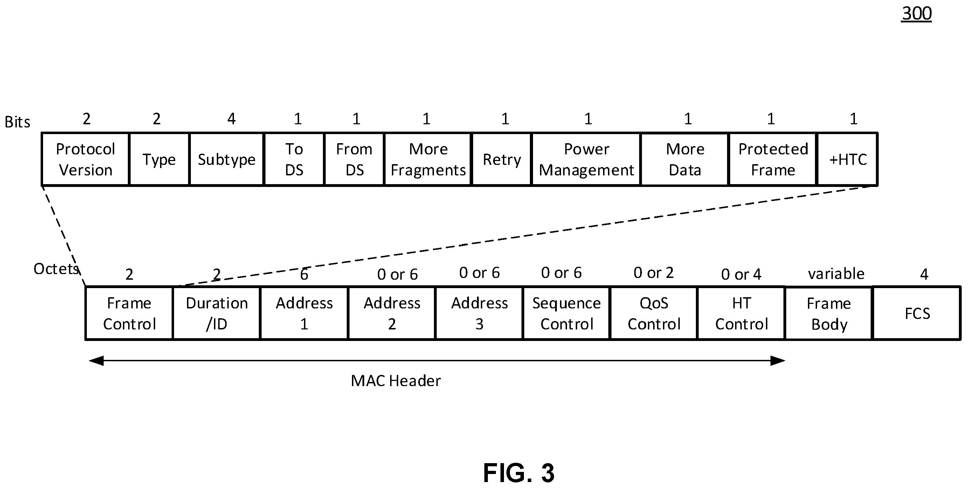

FIG. 3 shows an example format of a MAC frame 300. A STA in operation may construct a subset of MAC frames for transmission and may decode a subset of received MAC frames upon validation. The particular subsets of frames that a STA may construct and/or decode may be determined by the functions supported by the STA. A STA may validate a received MAC frame using the frame check sequence (FCS) contained in the frame and may interpret certain fields from the MAC headers of all frames.

As shown in FIG. 3, a MAC frame may include a MAC header, a variable length frame body, and a frame check sequence (FCS). The MAC header may include a frame control field, an optional duration/ID field, address fields, an optional sequence control field, an optional QoS control field, and an optional HT control field. The frame control field may include the following subfields: protocol version, type, subtype, "To DS", "From DS", "More Fragments", retry, power management, "More Data", protected frame, and +HTC (high throughput control). The protocol version subfield may be invariant in size and placement across all revisions of the IEEE 802.11 standard. The value of the protocol version subfield may be 0 for MAC frames.

The type and subtype subfields together may identify the function of the MAC frame. There may be three frame types: control, data, and management. Each of the frame types may have several defined subtypes. Bits within the subtype subfield may be used to indicate a specific modification of the basic data frame (subtype 0). For example, in data frames, the most significant bit (MSB) of the subtype subfield, bit 7 (B7) of the frame control field, may be defined as the QoS subfield. A QoS data frame may be indicated, which is a data frame that contains a QoS control field in its MAC header, if the QoS subfield is set to 1. The second MSB of the subtype field, bit 6 (B6) of the frame control field, if set to 1 in data subtypes, indicates a data frame that contain no frame body field.

The "To DS" subfield may indicate whether a data frame is destined to the distribution system (DS). The "From DS" subfield may indicate whether a data frame originates from the DS.

The "More Fragments" subfield may be set to 1 in all data or management frames that have another fragment to follow the MAC service data unit (MSDU) or MAC management protocol data unit (MMPDU) carried by the MAC frame. The "More Fragments" subfield may be set to 0 in all other frames in which the "More Fragments" subfield is present.

The retry subfield may be set to 1 in any data or management frame that is a retransmission of an earlier frame. It may be set to 0 in all other frames in which the retry subfield is present. A receiving STA may use this indication to aid it in the process of eliminating duplicate frames. These rules may not apply for frames sent by a STA under a block agreement. The power management subfield may be used to indicate the power management mode of a STA.

The "More Data" subfield may indicate to a STA in power save (PS) mode that bufferable units (BUs) are buffered for that STA at the AP. The "More Data" subfield may be valid in individually addressed data or management frames sent (e.g., transmitted) by an AP to a STA in PS mode. The "More Data" subfield may be set to 1 to indicate that at least one additional buffered BU is present for the STA.

The protected frame subfield may be set to 1 if the frame body field contains information that has been processed by a cryptographic encapsulation algorithm. The +HTC subfield may indicate that the MAC frame contains an HT control field.

The duration/ID field of the MAC header may indicate various contents depending on the frame type and subtype and the QoS capabilities of the sending STA. For example, the duration/ID field, in control frames of the power save poll (PS-Poll) subtype, may carry an association identifier (AID) of the STA that sent (e.g., transmitted) the frame in the 14 least significant bits (LSB), with the 2 most significant bits (MSB) set to 1. The duration/ID field, in other frames sent by STAs, may contain a duration value (in microseconds) which is used by a recipient to update a network allocation vector (NAV). The NAV may be a counter that indicates to a STA an amount of time during which the STA must defer from accessing the shared medium.

Up to four address fields may be present in the MAC frame format. The address fields may be used to indicate the basic service set identifier (BSSID), source address (SA), destination address (DA), transmitting address (TA), and receiving address (RA). Certain frames may not contain some of the address fields. Certain address field usage may be specified by the relative position of the address field (1-4) within the MAC header, independent of the type of address present in that field. The address 1 field may identify the intended receiver(s) of the frame, and the address 2 field, where present, may identify the transmitter of the frame.

The sequence control field may include two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information may vary by frame type, frame subtype, and type of transmitting STA. The QoS control field may be present in all data frames in which the QoS subfield of the subtype subfield is equal to 1.

The HT control field may be present in QoS data, QoS null, and management frames as determined by the +HTC subfield of the frame control field. The frame body field may be a variable length field that contains information specific to individual frame types and subtypes. The frame body may include one or more MSDUs or MMPDUs. The minimum length of the frame body may be 0 octets.

The FCS field may contain a 32-bit Cyclic Redundancy Check (CRC) code. The FCS field value may be calculated over all of the fields of the MAC header and the frame body field.

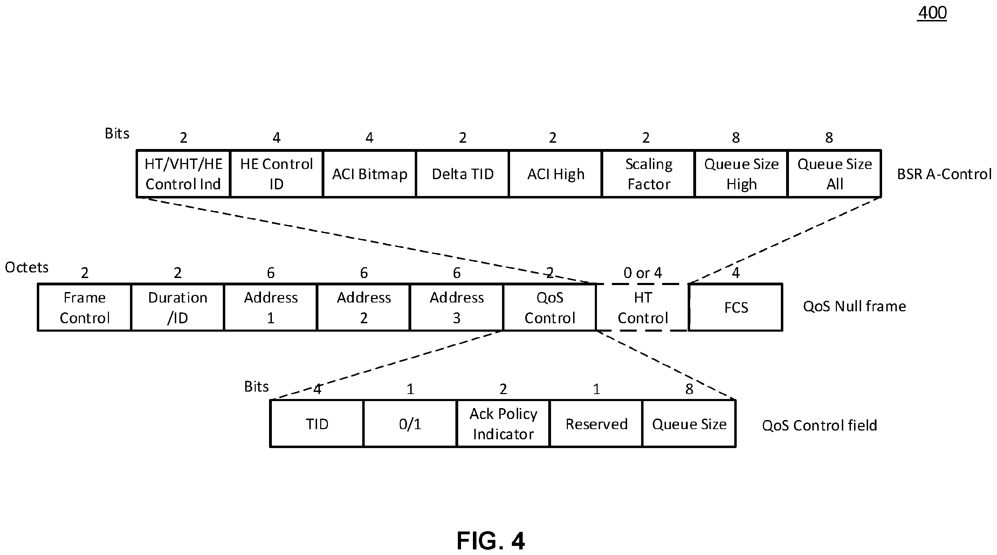

FIG. 4 shows an example 400 of a QoS null frame. The example 400 of the QoS null frame may indicate buffer status information. A QoS null frame may refer to a QoS data frame with an empty frame body. A QoS null frame may include a QoS control field and an optional HT control field. The QoS control field and the optional HT control field may contain a buffer status report (BSR) control subfield. A QoS null frame indicating buffer status information may, for example, be sent (e.g., transmitted) by a STA to an AP.

The QoS control field may include a traffic identifier (TID) subfield, an ack policy indicator subfield, and a queue size subfield (or a transmission opportunity (TXOP) duration requested subfield).

The TID subfield may identify the TC or TS of traffic for which a TXOP is being requested, for example, through the setting of the TXOP duration requested or queue size subfield. The encoding of the TID subfield may depend on the access policy (e.g., Allowed value 0 to 7 for enhanced distributed channel access (EDCA) access policy to identify user priority for either TC or TS).

The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that may indicate the amount of buffered traffic for a given TC or TS at the STA, for example, for transmission to the AP. The AP may, for example, be identified by the receiver address of the frame containing the subfield. The queue size subfield may be present in QoS null frames sent by a STA, for example, when/if bit 4 of the QoS control field is set to 1. The AP may use information contained in the queue size subfield to determine t TXOP duration assigned to the STA or to determine the uplink (UL) resources assigned to the STA.

The following rules may be used for the queue size value, for example, in a frame sent by or to a non-High Efficiency (non-HE) STA:
- The queue size value may be the approximate total size (rounded up to the nearest multiple of 256 octets and expressed in units of 256 octets) of all MSDUs and A-MSDUs buffered at the STA (excluding the MSDU or A-MSDU contained in the present QoS Data frame) in the delivery queue. The delivery queue may be used for MSDUs and A-MSDUs with TID values equal to the value indicated in the TID subfield of the QoS Control field.
- A queue size value of 0 may be used solely to indicate the absence of any buffered traffic in the queue used for the specified TID.
- A queue size value of 254 may be used for all sizes greater than 64 768 octets.
- A queue size value of 255 may be used to indicate an unspecified or unknown size.

The following rules may be used for the queue size value, for example, in a frame sent by an HE STA to an HE AP.

The queue size value (QS) may be the approximate total size in octets, of all MSDUs and A-MSDUs buffered at the STA in the delivery queue. The MSDUs and A-MSDUs buffered at the STA may, for example, include the MSDUs or A-MSDUs contained in the same PSDU as the frame containing the queue size subfield. The delivery queue may be used for MSDUs and A-MSDUs with TID values equal to the value indicated in the TID subfield of the QoS control field.

The queue size subfield may include a scaling factor subfield, for example, in bits B14-B15 of the QoS control field and an unscaled value (UV), for example, in bits B8-B13 of the QoS control field. The scaling factor subfield may provide the scaling factor (SF).

A STA may obtain the queue size (QS) from a received QoS control field, which may contain a scaling factor, SF, and an unscaled value, UV, as follows:
*QS =*
16 × *UV*, if/when *SF* is equal to 0;
1024 + 256 × *UV,* if/when *SF* is equal to 1;
17 408 + 2048 × *UV,* if/when *SF* is equal to 2;
148 480 + 32 768 × *UV,* if/when *SF* is equal to 3 and *UV* is less than 62;
> 2 147 328, if/when *SF* equal to is 3 and *UV* is equal to 62;
*Unspecified* or *Unknown,* if/when *SF* is equal to 3 and *UV* is equal to 63.

The TXOP duration requested subfield may indicate the duration (e.g., in units of 32 microseconds (us)). The TXOP duration requested subfield may be included instead of the queue size subfield. The TXOP duration requested subfield may indicate the duration that the sending STA determines it needs for its next TXOP for the specified TID. The TXOP duration requested subfield may be set to 0, for example, to indicate that no TXOP is requested for the specified TID in the current service period (SP). The TXOP duration requested subfield may be set to a nonzero value to indicate a requested TXOP duration, for example, in a range of (e.g., 32 us to 8160 us) with increments (e.g., 32 us).

The HT control field may include a BSR control subfield which may contain buffer status information used for UL MU operation. The BSR control subfield may be formed from an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC may be included in the queue size all subfield, and may be set to 0 otherwise. The buffer status of all 8 TIDs may be included, for example, if/when the ACI bitmap subfield is 0 and the delta TID subfield is 3.

The delta TID subfield, together with the values of the ACI bitmap subfield, may indicate the number of TIDs for which the STA may be reporting the buffer status.

The ACI high subfield may indicate the ACI of the AC for which the BSR may be indicated in the queue size high subfield. The ACI to AC mapping may be defined as ACI value 0 mapping to AC_BE, ACI value 1 mapping to AC_BK, ACI value 2 mapping to AC_VI, and ACI value 3 mapping to AC_VO.

The scaling factor subfield may indicate the unit SF (e.g., in octets) of the queue size high and queue size all subfields.

The queue size high subfield may indicate the amount of buffered traffic (e.g., in units of SF octets) for the AC identified by the ACI high subfield, for example, that may be intended for the STA identified by the receiver address of the frame containing the BSR control subfield.

The queue size all subfield may indicate the amount of buffered traffic (e.g., in units of SF octets) for all Acs identified by the ACI Bitmap subfield, for example, that may be intended for the STA identified by the receiver address of the frame containing the BSR control subfield.

The queue size values in the queue size high and queue size all subfields may be the total sizes (e.g., rounded up to the nearest multiple of SF octets) of all MSDUs and A-MSDUs buffered at the STA in delivery queues used for MSDUs and A-MSDUs associated with AC(s) that may be specified in the ACI high and ACI bitmap subfields, respectively. The MSDUs and A-MSDUs buffered at the STA may, for example, include the MSDUs or A-MSDUs contained in the same PSDU as the frame containing the BSR control subfield.

A queue size value of 254 in the queue size high and queue size all subfields may indicate that the amount of buffered traffic may be greater than 254 × SF octets. A queue size value of 255 in the queue size high and queue size all subfields may indicate that the amount of buffered traffic may be an unspecified or unknown size. The queue size value of QoS data frames containing fragments may remain constant, for example, if/when the amount of queued traffic changes as successive fragments may be sent (e.g., transmitted).

MAC service may provide peer entities with the ability to exchange MSDUs. To support this service, A local MAC may use the underlying PHY-level service to transport the MSDUs to a peer MAC entity, for example, to support MAC service. Such asynchronous MSDU transport may be performed on a connectionless basis.

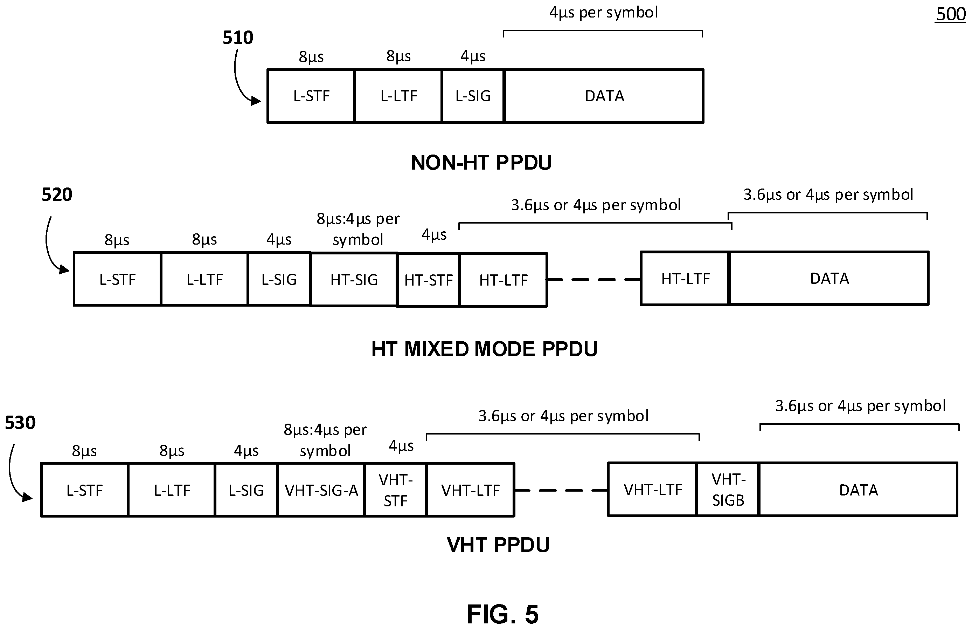

FIG. 5 shows examples of a PPDU 500, such as a non-High Throughput (non-HT) PPDU 510, a High Throughput (HT) mixed mode PPDU 520, and a Very High Throughput (VHT) PPDU 530.

Non-HT PPDU 510 may be used by STAs conforming to one or more standards (e.g., the IEEE 802.11a standard amendment). As shown in FIG. 5, non-HT PPDU 510 may include a non-HT Short Training field (L-STF), a non-HT Long Training field (L-LTF), a non-HT Signal field (L-SIG), and a Data field. The L-STF, L-LTF, and L-SIG fields may form a preamble (e.g., a 20 µs preamble) of non-HT PPDU 510.

The L-STF may be used by a receiver of non-HT PPDU 510 to synchronize with the carrier frequency and frame timing of a transmitter of non-HT PPDU 510 and to adjust the receiver signal gain. The L-LTF may be used by the receiver of non-HT PPDU 510 to determine (e.g., estimate) channel coefficients, for example, to equalize the channel response (e.g., amplitude and phase distortion) in both the L-SIG field and the Data field of non-HT PPDU 510.

The L-SIG may contain parameters needed to demodulate the Data field. The Data field may contain a payload of non-HT PPDU 510. The L-SIG may be processed to generate demodulation parameters of the Data field. For example, the L-SIG may be equalized using the channel coefficients determined/estimated using the L-L TF and/or demodulated to obtain the demodulation parameters of the Data field. The Data field may comprise one or more symbols each having a duration of 4 µs (or any other value). A part of the duration may carry symbol information and a remaining part of the duration may carry a Guard Interval (GI). For example, 3.2 µs may carry symbol information and 0.8 µs may carry a GI, for example, if the duration is 4 µs.

For non-HT PPDUs, the supported (e.g., only supported) bandwidth may be 20MHz, which may be divided into 64 subcarriers. As such, non-HT PPDU 510 may be encoded using a subcarrier spacing of 20MHz/64 or 312.5 kHz.

HT mixed mode PPDU 520 may be used by STAs conforming to one or more standards (e.g., the IEEE 802.11n standard amendment). HT mixed mode PPDU 520 may support MIMO and enhance spectral efficiency. For example, HT mixed mode PPDU 520 may support MIMO to up to 4 spatial streams, which may enhance spectral efficiency four folds. HT mixed mode PPDU 520 may have a minimum preamble duration. The minimum preamble duration may increase, for example, based on the number/quantity of spatial streams carried by the PPDU. For example, HT mixed mode PPDU 520 may have a minimum preamble duration of 35.6 µs (or any other value), which may increase depending on the number/quantity of spatial streams carried by the PPDU.

As shown in FIG. 5, HT mixed mode PPDU 520 may include an L-STF, an L-LTF, an L-SIG, an HT Signal field (HT-SIG), an HT Short Training field (HT-STF), one or more HT Long Training field (HT-LTF), and a Data field. The HT-LTF field and the Data field may comprise one or more symbols each having a duration of 3.6 µs or 4 µs (or any other values). A fixed length of duration may be used for carrying symbol information, for example, under different lengths of durations. The remaining length of duration may be used for carrying a GI. For example, for each symbol having a duration of 3.6 µs or 4 µs as described herein, 3.2 µs may carry symbol information while the remaining 0.4 µs or 0.8 µs may carry a GI. The 0.4 µs long GI may be called short GI while the 0.8 µs long GI may be called regular or normal GI.

For HT mixed mode PPDUs, two bandwidths, 20 MHz, and 40 MHz, may be supported. A band may be divided into 64 subcarriers, for example, if/when the PPDU bandwidth is 20MHz. A band may be divided into 128 subcarriers, for example, if/when the PPDU bandwidth is 40 MHz. In both cases, a subcarrier spacing of 312.5 kHz may be maintained.

VHT PPDU 530 may be used by STAs conforming to the IEEE 802.11ac standard amendment. VHT PPDU 530 may support MIMO transmission and enhance spectral efficiency. For example, VHT PPDU 330 may support MIMO transmission to up to 8 spatial streams, which may enhance spectral efficiency eight folds. VHT PPDU 530 may have a minimum preamble duration. The minimum preamble duration may increase, for example, based on the number/quantity of spatial streams carried by VHT PPDU 530. For example, VHT PPDU 530 may have a minimum preamble duration of 39.6 µs, which may increase depending on the number/quantity of spatial streams carried by VHT PPDU 530.

As shown in FIG. 5, VHT PPDU 530 may include an L-STF, an L-LTF, an L-SIG, a VHT Signal A field (VHT-SIG-A), a VHT Short Training field (VHT-STF), one or more VHT Long Training field (VHT-LTF), a VHT Signal B field (VHT-SIG-B), and a Data field. The VHT-LTF field and the Data field of VHT PPDU 530 may comprise one or more symbols each having a duration of 3.6 µs or 4 µs (or any other value). Similar to HT mixed mode PPDU 520, for each symbol having a duration of 3.6 µs or 4 µs as described herein, 3.2 µs may carry symbol information while the remaining 0.4 µs or 0.8 µs may carry a GI. The 0.4 µs long GI may be called short GI while the 0.8µs long GI may be called regular or normal GI.

For VHT PPDUs, four bandwidths, 20 MHz, 40 MHz, 80 MHz, and 160 MHz, may be supported. The band may be divided into 64 subcarriers, for example, if/when the PPDU bandwidth is 20 MHz. The band may be divided into 128 subcarriers, for example, if/when the PPDU bandwidth is 40 MHz. The band may be divided into 256 subcarriers, for example, if/when the PPDU bandwidth is 80 MHz. The band may be divided into two 256-subcarrier 80 MHz bands, for example, if/when the PPDU bandwidth is 160 MHz. In all cases, a subcarrier spacing of 312.5 kHz may be maintained.

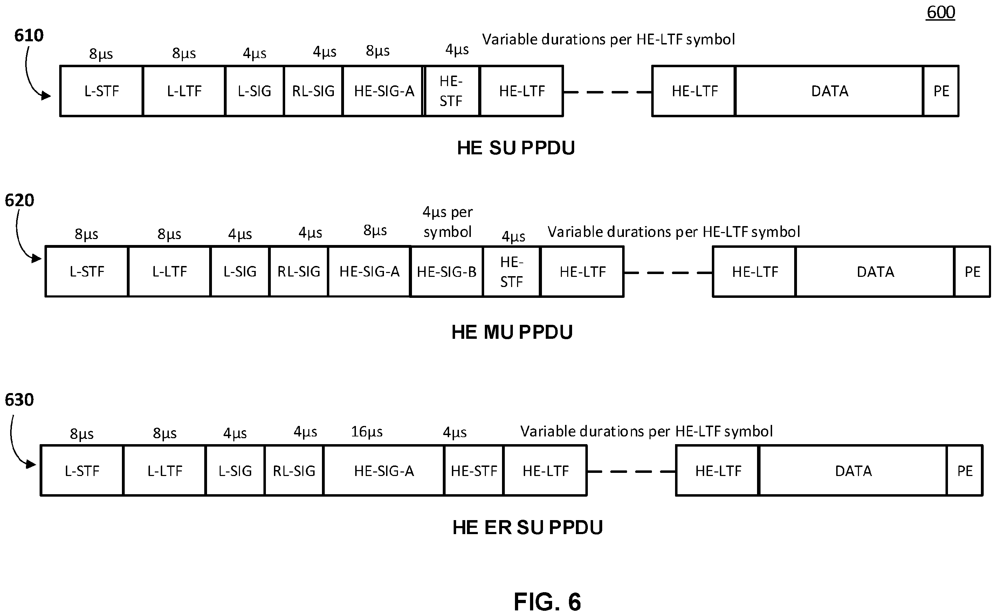

FIG. 6 shows examples of PPDU 600, such as, a High Efficiency (HE) Single User (SU) PPDU 610, an HE Multi-User (MU) PPDU 620, an HE Extended Range (ER) SU PPDU 630. HE SU PPDU 610, HE MU PPDU 620, and HE ER SU PPDU 630 may be used by STAs conforming to the IEEE 802.11ax standard amendment.

HE SU PPDU 610 may support higher spectral efficiency compared to VHT PPDU 530, for example, due to increased subcarrier spacing and/or higher order modulation support. HE SU PPDU 610 may have a minimum preamble duration of 44 µs (or any other value).

As shown in FIG. 6, HE SU PPDU 610 may include an L-STF, an L-LTF, an L-SIG, a Repeated L-SIG field (RL-SIG), an HE Signal A field (HE-SIG-A), an HE Short Training field (HE-STF), one or more HE Long Training field (HE-LTF), a Data field, and a Packet Extension (PE) field.

Similar to HE SU PPDU 610, HE MU PPDU 620 may support higher spectral efficiency compared to VHT PPDU 530. HE MU PPDU 620 may also support OFDMA. HE MU PPDU 620 may allow for payloads of multiple users to be multiplexed in the frequency domain in the Data field, for example, due to denser subcarrier spacing (as in HE SU PPDU 610). HE MU PPDU 620 may support multiplexing the payload of a plurality of (e.g., up to 9) users in a single band (e.g., 20 MHz band). HE MU PPDU 620 may have a minimum preamble duration of 47.2 µs (or any other value), which may increase depending on the number/quantity of spatial streams carried by HE MU PPDU 620.

As shown in FIG. 6, HE MU PPDU 620 may include an L-STF, an L-LTF, an L-SIG, an RL-SIG, an HE-SIG-A field, an HE Signal B field (HE-SIG-B), an HE-STF field, one or more HE-LTF fields, a Data field, and a PE field. HE MU PPDU 620 may further include HE-SIG-B compared to HE SU PPDU 610. HE-SIG-B may contain indications per STA of RU allocations. A STA may use the indications in HE-SIG-B to locate its payload in HE MU PPDU 620.

For HE SU PPDU 610 and/or HE MU PPDU 620, the GI portion (e.g., duration) of the HE-LTF field and the Data field may be one of 0.8 µs, 1.6 µs, and 3.2 µs. An AP or STA may use a suitable GI duration depending on the channel conditions or capability of the target STA or AP.

For both HE SU PPDU 610 and HE MU PPDU 620, the information portion of the HE-LTF may be one of 3.2 µs, 6.4 µs, or 12.8 µs. A subcarrier spacing of the HE-LTF may depend on the information portion (e.g., duration) of the HE-LTF. For example, a subcarrier spacing of the HE-LTF may be 312.5 kHz, for example, if the information potion is 3.2 µs. A subcarrier spacing of the HE-LTF may be 156.25 kHz, for example, if the information portion is 6.4 µs. A subcarrier spacing of the HE-LTF may be 78.125 kHz, for example, if the information portion is 12.8 µs. Unlike the HE-LTF, the information portion of the Data field for both HE SU PPDU 610 and HE MU PPDU 620 may be a fixed value (e.g., is always 12.8 µs). A subcarrier spacing of the Data field may be a fixed value corresponding to the information portion (e.g., duration thereof). For example, a subcarrier spacing of the Data field is always 78.125 kHz corresponding to the duration of the information portion being 12.8 µs. When/if a/an (e.g., 3.2 µs or 6.4 µs long) HE-LTF is used by a transmitting STA to transmit/send HE SU PPDU 610 or HE MU PPDU 620, a receiving STA may be required to interpolate the channel estimates to a subcarrier spacing (e.g., a resolution of 78.125 kHz) to match the subcarrier spacing of the Data field.

As shown in FIG. 6, HE ER SU PPDU 630 may include an L-STF, an L-LTF, an L-SIG, an RL-SIG, an HE-SIG-A field, an HE-STF field, one or more HE-LTF fields, a Data field, and a PE field. HE ER SU PPDU 630 may have an HE-SIG-A field that is duplicated in the time domain, for example, compared to HE SU PPDU 610. For example, the HE-SIG-A field of the HE ER SU PPDU 630 may be 16 µs long instead of 8 µs long as in HE SU PPDU 610. As such, both L-SIG (duplicated using RL-SIG) and HE-SIG-A may be sent in duplicates, which may allow a receiving STA to combine the two copies to increase the energy of the received signal. This increased energy may result in an extended range of reception and may increase transmission reliability between the transmitting STA and the receiving STA.

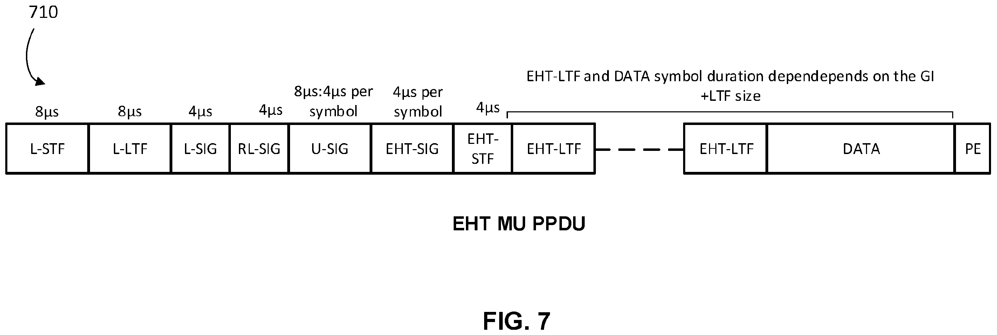

FIG. 7 shows an example of PPDU. More specifically, FIG. 7 shows an Extremely High Throughput (EHT) Multi-user (MU) PPDU 710. EHT MU PPDU 710 may support OFDMA. For example, EHT MU PPDU 710 may support OFDMA up to a bandwidth of 320 MHz. EHT MU PPDU 710 may improve spectral efficiency, for example, due to support of a higher order modulation compared to other PPDUs (e.g., HE SU PPDU 610 and HE MU PPDU 620) while supporting the same number/quantity of spatial streams. EHT MU PPDU 710 may have a minimum preamble duration of 47.2 µs (or any other value), which may increase depending on the number/quantity of spatial streams carried by EHT MU PPDU 710.

As shown in FIG. 7, EHT MU PPDU 710 may include an L-STF, an L-LTF, an L-SIG, an RL-SIG, a Universal Signal field (U-SIG), an EHT Signal field (EHT-SIG), an EHT Short Training field (EHT-STF), one or more EHT Long Training fields (EHT-LTF), a Data field, and a PE field. EHT MU PPDU 710 may be used by a transmitting STA for both SU and MU transmissions, according to one or more standards, such as the IEEE 802.11be standard amendment and/or any earlier or later release and/or version.

The U-SIG may allow (e.g., ensure) forward compatibility of EHT MU PPDU 710. This may mean that any future PPDUs that are backward compatible to a standard such as IEEE 802.11be may contain the same U-SIG field and interpretation. For example, IEEE 802.11be STAs may be able to understand at least in part a PPDU developed in a future amendment.

The EHT-SIG may contain indications per STA of resource unit (RU) allocations. A STA may use the indications in the EHT-SIG to locate payload in EHT MU PPDU 710.

The GI portion of the EHT-LTF and Data fields of EHT MU PPDU 710 may be one of: 0.8 µs, 1.6 µs, or 3.2 µs. An AP or STA may use a suitable GI duration depending on the channel conditions or capability of the target STA or AP.

The information portion of the EHT-LTF may be one of 3.2 µs, 6.4 µs, or 12.8 µs. Depending on the information portion duration, a subcarrier spacing of the EHT-LTF may be one of: 312.5 kHz if the information potion is 3.2 µs, 156.25 kHz if the information portion is 6.4 µs, or 78.125 kHz if the information portion is 12.8 µs. The information portion of the Data field of EHT MU PPDU 710 may always be 12.8 µs. A subcarrier spacing of the Data field may always be 78.125 kHz corresponding to the duration of the information portion being 12.8 µs. When/if a 3.2 µs long or a 6.4 µs long EHT-LTF is used by a transmitting STA to send (e.g., transmit) EHT MU PPDU 710, a receiving STA may be required to interpolate the channel estimates to a subcarrier spacing resolution of 78.125 kHz to match the Data field subcarrier spacing.

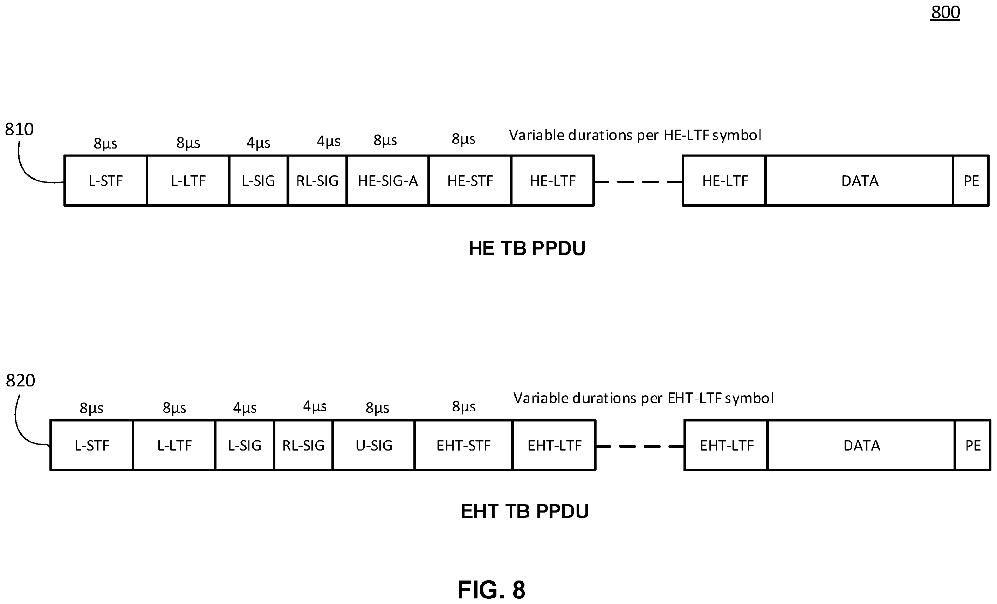

FIG. 8 shows examples of trigger-based (TB) PPDUs 800. The TB PPDUs may be used by a STA for UL OFDMA or UL MU MIMO. HE TB PPDU 810 may be used by a STA conforming to one or more standards (e.g., IEEE 802.11 ax standard amendment). HE TB PPDU 810 may share the high spectral efficiency of HE SU PPDU 610 and HE MU PPDU 620 described with FIG. 6. As shown in FIG. 8, HE TB PPDU 810 may include an L-STF, an L-LTF, an L-SIG, a Repeated L-SIG (RL-SIG), an HE-SIG-A, an HE-STF, one or more HE-L TF, a Data field, and a PE field., HE TB PPDU 810 may have a double duration HE-STF (e.g., 8 µs instead of 4 µs), for example, compared to HE SU PPDU 610. The double duration HE-STF may improve time and carrier frequency synchronization needed to receive a TB PPDU (e.g., HE TB PPDU 810).

The GI portion of the HE-LTF and Data field of HE TB PPDU 810 may, for example, be one of: 0.8 µs, 1.6 µs, or 3.2 µs. An AP or a STA may use a suitable GI duration depending on the channel conditions or capability of the target STA or AP.

The information portion of the HE-LTF of HE TB PPDU 810 may, for example, be one of: 3.2 µs, 6.4 µs, or 12.8 µs. A subcarrier spacing of the HE-LTF may, for example, be 312.5 kHz if/when the information potion may be 3.2 µs. The subcarrier spacing of the HE-LTF may, for example, be 156.25 kHz if/when the information portion may be 6.4 µs. The subcarrier spacing of the HE-LTF may, for example, be 78.125 kHz if/when the information portion may be 12.8 µs.

The information portion of the Data field of HE TB PPDU 810 may always be 12.8 µs. A subcarrier spacing of the Data field may always be 78.125 kHz corresponding to the duration of the information portion being 12.8 µs.

A receiving STA may be required to interpolate the channel estimates. The channel estimates may be interpolated to a subcarrier spacing resolution of 78.125 kHz to match the Data field subcarrier spacing, for example, if/when a 3.2 µs long or a 6.4 µs long HE-LTF may be used by a transmitting STA to send (e.g., transmit) HE TB PPDU 810.

EHT TB PPDU 820 may be used by a STA conforming to one or more standards (e.g., IEEE 802.11be standard amendment). As shown in FIG. 8, EHT TB PPDU 820 may include an L-STF, an L-LTF, an L-SIG, an RL-SIG, a U-SIG, an EHT-STF, one or more EHT-LTF, a Data field, and a PE field.

The GI portion of the Data field of EHT TB PPDU 820 may, for example, be one of: 0.8 µs, 1.6 µs, or 3.2 µs. The non-GI portion of the Data Field (having a fixed duration of 12.8 µs) may, for example, have a duration of 13.6 µs, 14.4 µs, or 16 µs. An AP or STA may use a suitable GI depending on the channel conditions or capability of the target STA or AP. The subcarrier spacing at the Data field may be equal to 78.125 kHz regardless of PPDU bandwidth.

The non-GI portion of the EHT-LTF of EHT TB PPDU 820 may, for example, be 3.2 µs, 6.4 µs or 12.8 µs long. This may result in a subcarrier spacing of, for example, 312.5 kHz, 156.25 kHz, or 78.125 kHz, respectively. A receiving STA may be required to interpolate the channel estimates to a subcarrier spacing resolution of 78.125 kHz to match the Data field subcarrier spacing, for example, if/when a 3.2 µs long or a 6.4 µs long EHT-LTF may be used by a transmitting STA.

HE-LTFs in HE PPDUs (e.g., HE SU PPDU 610, HE MU PPDU 620, HE ER SU PPDU 630, and HE TB PPDU 810) may be sent (e.g., transmitted) using a subcarrier spacing of 312.5 kHz (information duration of 3.2 µs) or a subcarrier spacing of 156.25 kHz (information duration of 6.4 µs), instead of a subcarrier spacing of 78.125 kHz (information duration of 12.8 µs).

EHT-LTFs in EHT PPDUs (e.g., EHT MU PPDU 710 and EHT TB PPDU 820) may be sent (e.g., transmitted) using a subcarrier spacing of 312.5 kHz (information duration of 3.2 µs) or a subcarrier spacing of 156.25 kHz (information duration of 6.4 µs), instead of a subcarrier spacing of 78.125 kHz (information duration of 12.8 µs).

An HE-LTF or an EHT-LTF with a subcarrier spacing of 78.125 kHz (e.g., equal to the subcarrier spacing of the Data field) may increase decoding accuracy but may result in a larger overhead, for example, if/when the PPDU may include several HE-LTFs or EHT-LTFs. Using an HE-LTF or an EHT-LTF with a larger subcarrier spacing may reduce the overhead. A larger subcarrier spacing may require an interpolation circuitry at the receiver to generate intermediate channel estimates for subcarriers present in the Data field that may not be present in the HE-LTF or EHT-LTF. An interpolation circuit may degrade performance due to processing noise added by the interpolation step, for example, in addition to increasing receiver complexity and cost.

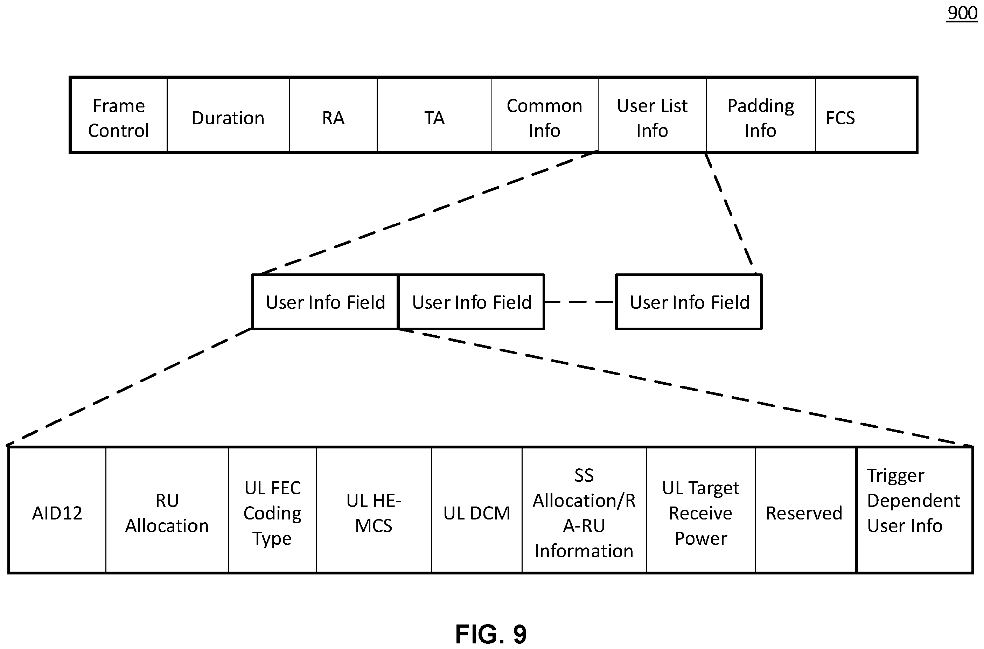

FIG. 9 shows an example trigger frame 900. Trigger frame 900 may correspond to a basic trigger frame as defined in the at least some IEEE 802.11ax standard amendment. Trigger frame 900 may be used by an AP to allocate resources for and solicit one or more trigger-based (TB) PPDU transmissions from one or more STAs. Trigger frame 900 may also carry other information required by a responding STA to send (e.g., transmit) a TB PPDU to the AP.

Trigger frame 900, as shown in FIG. 9, may include a Frame Control field, a Duration field, a receiver address (RA) field, a transmitter address (TA) field, a Common Info field, a User Info List field, a Padding field, and an FCS field. The Frame Control field may include the following subfields: protocol version, type, subtype, To DS, From DS, more fragments, retry, power management, more data, protected frame, and +HTC.

The Duration field may indicate various contents depending on frame type and subtype and the QoS capabilities of the sending STA. For example, the Duration field, in control frames of the power save poll (PS-Poll) subtype, may carry an association identifier (AID) of the STA that sent (e.g., transmitted) the frame in the 16 least significant bits (LSB), and the 2 most significant bits (MSB) are both set to 1. The Duration field, in other frames sent by STAs, may contain a duration value (in microseconds) which is used by a recipient to update a network allocation vector (NAV).

The RA field may be the address of the STA that is intended to receive the incoming transmission from the transmitting station. The TA field may be the address of the STA sending (e.g., transmitting) trigger frame 900 if trigger frame 900 is addressed to STAs that belong to a single BSS. The TA field may be the sent (e.g., transmitted) BSSID if the trigger frame 900 is addressed to STAs from at least two different BSSs of the multiple BSSID set.

The Common Info field may have a format as shown by common info field 1000 described further below. The common info field may specify a trigger frame type of trigger frame 900, a transmit power of trigger frame 900 in dBm, and several key parameters of a TB PPDU that is sent (e.g., transmitted) by a STA in response to trigger frame 900. The trigger frame type of a trigger frame used by an AP to receive QoS data using UL MU operation may be referred to as a basic trigger frame.

The User List Info field may contain a User Info field per STA addressed in trigger frame 900. The per STA User Info field may include, among others, an AID subfield, an RU Allocation subfield, a Spatial Stream (SS) Allocation subfield, a modulation and coding scheme (MCS) subfield to be used by a STA in a TB PPDU, and a Trigger Dependent User Info subfield. The TB PPDU may be sent (e.g., transmitted), for example, based on (e.g., in response to) trigger frame 900. The Trigger Dependent User Info subfield may be used by an AP to specify a preferred access category (AC) per STA. The preferred AC may set the minimum priority AC traffic that can be sent by a participating STA. The AP may determine the list of participating STAs, along with the BW, MCS, RU allocation, SS allocation, Tx power, preferred AC, and maximum duration of the TB PPDU per participating STA.

The Padding field may be optionally present in trigger frame 900 to extend the frame length to give recipient STAs enough time to prepare a response for transmission one SIFS (short interframe spacing) after the frame is received. The Padding field, if present, may be at least two octets in length and may be set to all 1s. The FCS field may be used by a STA to validate a received frame and to interpret certain fields from the MAC headers of a frame.

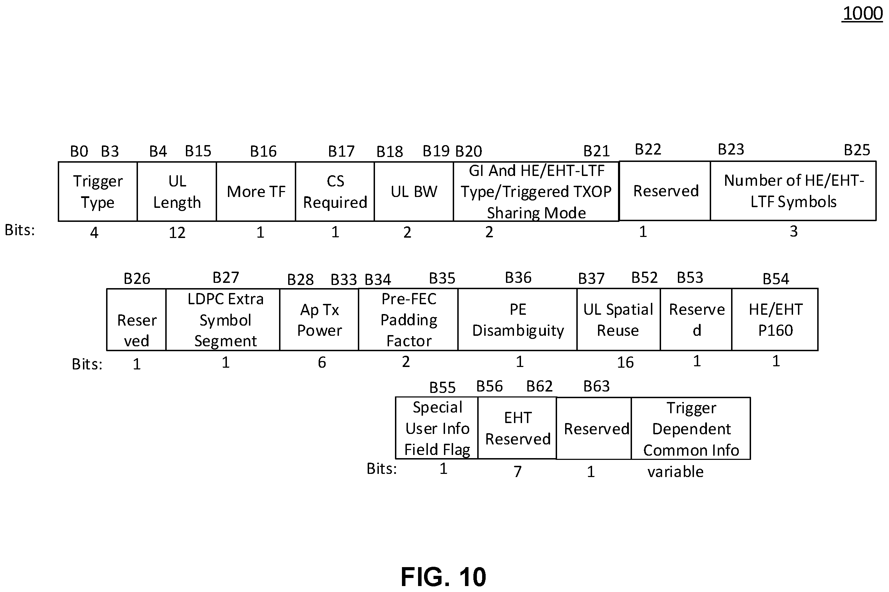

FIG. 10 shows an example Common Info field 1000. Common Info field 1000 may be similar to the Common Info field of trigger frame 900 or an MU-RTS trigger frame. Common Info field 1000, as shown in FIG. 10, may include a Trigger Type subfield, a UL Length subfield, a More TF subfield, a CS required subfield, a UL BW subfield, a GI and HE/EHT-LTF Type/Triggered TXS Mode subfield, a first Reserved subfield, a Number of HE/EHT-LTF Symbols subfield, a second Reserved subfield, an LDPC Extra Symbol Segment subfield, an AP Tx Power subfield, a Pre-FEC Padding Factor subfield, a PE Disambiguity subfield, an UL Spatial Reuse subfield, a third Reserved subfield, a HE/EHT P160 subfield, a Special User Info Field Flag subfield, an EHT Reserved subfield, a fourth Reserved subfield, and a Trigger Dependent Common Info subfield. The Trigger Type subfield, UL Length subfield, More TF subfield, CS required subfield, UL BW subfield, GI and HE-LTF Type/Triggered TXS Mode subfield, first Reserved subfield, Number of HE/EHT-LTF Symbols subfield, second Reserved subfield, LDPC Extra Symbol Segment subfield, AP Tx Power subfield, Pre-FEC Padding Factor subfield, PE Disambiguity subfield, UL Spatial Reuse subfield, third Reserved subfield, HE/EHT P160 subfield, Special User Info Field Flag subfield, EHT Reserved subfield, fourth Reserved subfield, and Trigger Dependent Common Info subfield may have the same content and interpretation as corresponding subfields of an EHT variant Common Info field defined in the IEEE 802.11be draft amendment ("IEEE P802.11be/D3.1, March 2023").

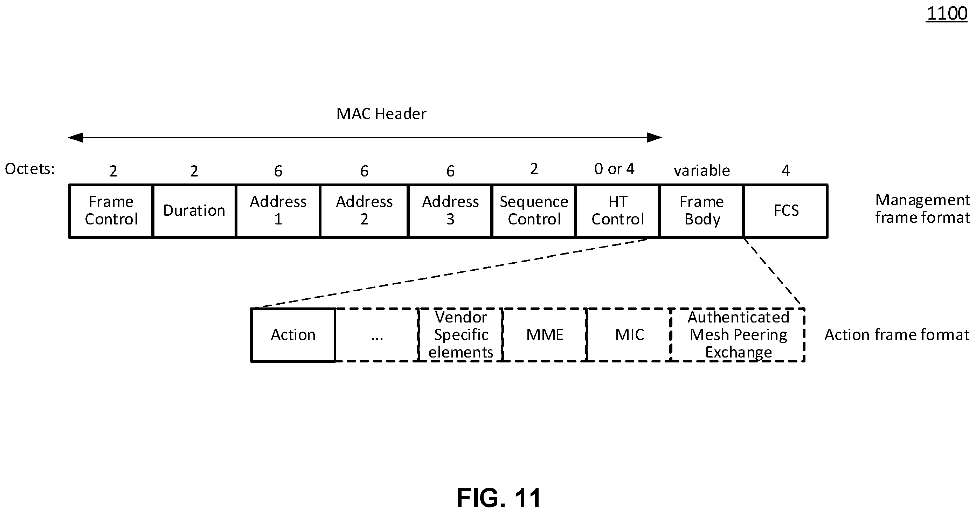

FIG. 11 shows an example management frame. More specifically, FIG. 11 shows an example management frame 1100 which may be used as an action frame. A management frame 1100 may include a MAC header, a variable length frame body, and a frame check sequence (FCS). The MAC header may include a frame control field, a duration field, an address 1 field, an address 2 field, an address 3 field, a sequence control field, and an optional HT control field. The presence of the HT control field may be determined by the setting of the frame control field. For example, the presence of the HT control field may be determined by the setting of a subfield (e.g., +HTC subfield) of the frame control field.

As shown in FIG. 11, when/if used as an action frame, the frame body of the management frame may include an action field, a vendor specific elements field, management message integrity code element (MME), message integrity code (MIC), and an authenticated mesh peering exchange element.

The action field may include a category field and an action details field. The action field may provide a mechanism for specifying extended management actions. The category field may indicate a category of the action frame. The action details field may contain the details of the action requested by the action frame.

The MME may be present, for example, when/if management frame protection is negotiated. The MME may be present, for example, when/if the frame is a group addressed robust Action frame. The MME may be present, for example, when/if the category of the action frame does not support group addressed privacy as indicated by category values (e.g., mesh basic service set (MBSS) only). The MME might not be present in other situations.

The MIC element may be present in a self-protected action frame, for example, if a shared pairwise master key (PMK) exists between the sender and recipient of this frame. The MIC might not be present in other situations.

The authenticated mesh peering exchange element may be present in a self-protected action frame, for example, if a shared PMK exists between the sender and recipient of this frame. The authenticated mesh peering exchange might not be present in other situations.

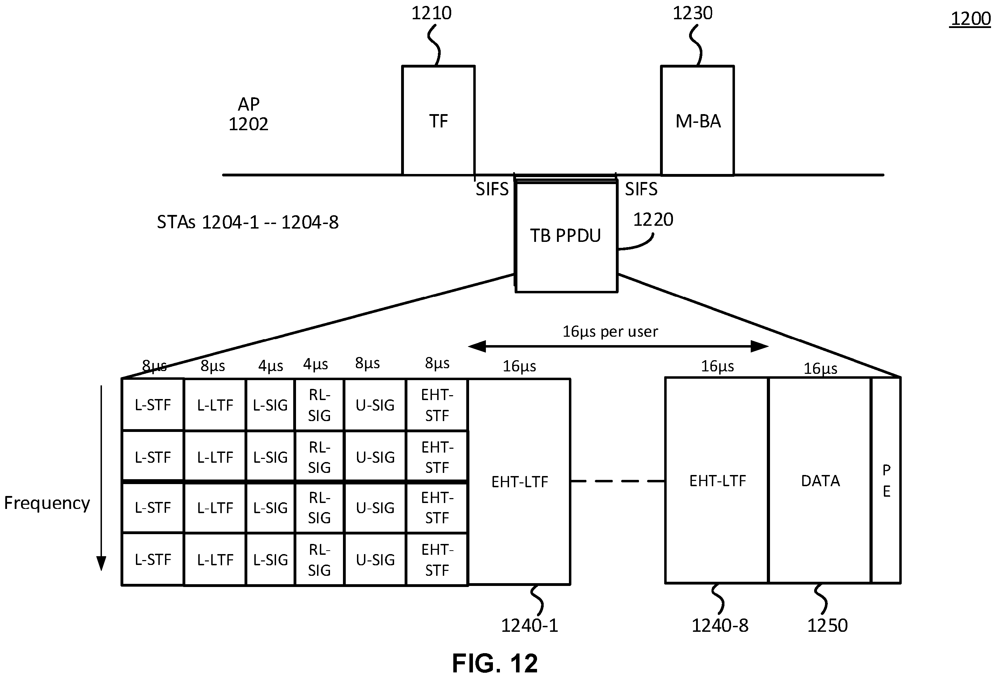

FIG. 12 shows an example application of TB PPDU. As shown in FIG. 12, the example 1200 may include an AP (e.g., AP 1202) and a plurality of STAs (e.g., STAs 1204-1 to 1204-8). An AP 1202 may send (e.g., transmit) a trigger frame (TF) 1210 to STAs 1204 (e.g., 1204-1 to 1204-8) to solicit uplink (UL) frames from STAs 1204 (e.g., 1204-1 to 1204-8).

STAs 1104 (e.g., 1204-1 to 1204-8) may respond (e.g., simultaneously) to TF 1210 by (e.g., each) sending (e.g., transmitting) a TB PPDU 1220. TB PPDU 1220 may have an 80 MHz bandwidth (or any other value). A STA 1204 may duplicate the fields L-STF, L-LTF, L-SIG, RL-SIG, U-SIG, and EHT-STF to fill the bandwidth of the TB PPDU 1220. For example, as shown in FIG. 12, a STA 1204 may duplicate four times over frequency each of the fields L-STF, L-LTF, L-SIG, RL-SIG, U-SIG, and EHT-STF to fill out the 80 MHz bandwidth. EHT-LTFs 1240 and a data field 1250 of the TB PPDU 1220 may fill out the entire 80 MHz bandwidth and are not duplicated over frequency. The number/quantity of EHT-LTFs sent (e.g. transmitted) by the STA (in time, or in the time domain) may be based on the maximum number/quantity of spatial streams across all RUs contained in TB PPDU 1220. In the example 1200, TB PPDU 1220 may include eight EHT-LTFs 1240-1 to 1240-8.

AP 1202 may acknowledge TB PPDU 1220 by sending (e.g., transmitting) a multi-user block acknowledgment frame M-BA 1230.

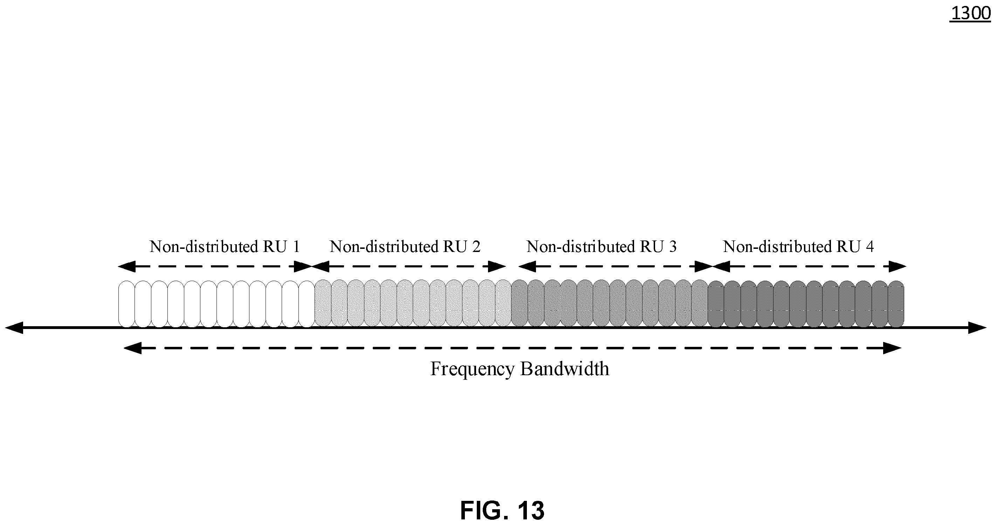

Tables 27-7, 27-8, and 27-9 of the IEEE 802.11 standard may provide the RU indices and subcarrier ranges for RUs, for example, for different RU type and PPDU bandwidth combinations. The PPDU may have four RUs (e.g., indexed RU 1, RU 2, RU 3, and RU 4), for example, for a 52-tone RU and a 20 MHz PPDU bandwidth. RU 1 may correspond to the subcarrier range [-121:-70], RU 2 may correspond to the subcarrier range [-68:-17], RU 3 may correspond to the subcarrier range [17:68], and RU 4 may correspond to the subcarrier range [70:121]. An allocation 1300 comprising RU 1, RU 2, RU 3, and RU 4 may, for example, be as shown in FIG. 13. RU 1, RU 2, RU 3, and RU 4 may each include a contiguous set of tones over a respective part of the PPDU bandwidth. The respective parts of the PPDU bandwidth covered by different RUs may be non-overlapping and may be separated from one another by one or more null tones. The set of tones of the RU may cover the entire PPDU bandwidth, for example, if a PPDU comprises a single RU.

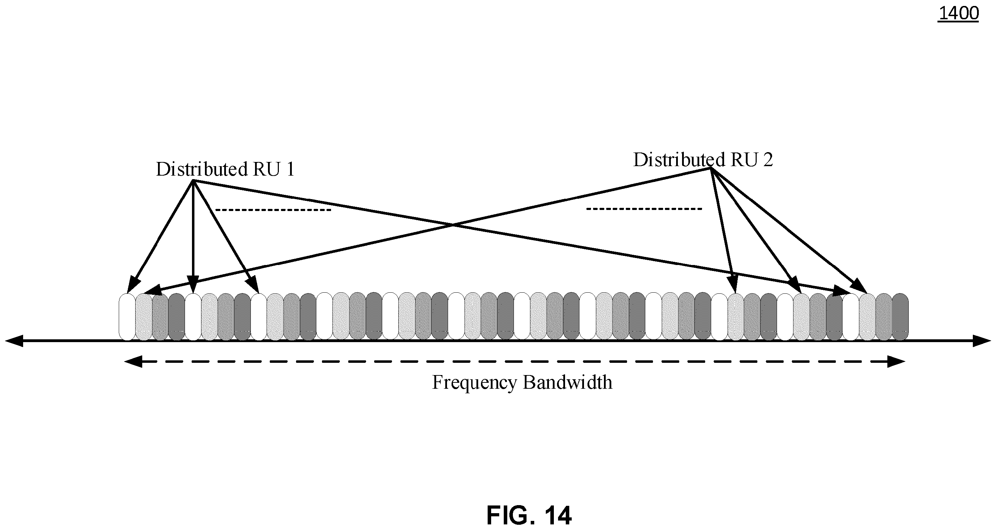

One or more IEEE 802.11 standards may define only RUs including contiguous sets of tones (e.g., as illustrated in FIG. 13). Such RUs may hereinafter be referred to as non-distributed RUs (or regular RUs (RRUs)). U.S. Patent 11,044,057 proposes an RU, called distributed RU (DRU), that includes a non-contiguous set of tones spread over the PPDU bandwidth. Fig. 14 shows an example allocation 1400 of distributed RUs. A distributed RU may include a non-contiguous set of tones that may be spread over the entire bandwidth of the PPDU bandwidth, for example, in comparison to an RU being composed of a contiguous set of tones that may cover a respective part only of the PPDU.

Spreading the RU over the entire PPDU bandwidth may significantly decrease the power spectral density (PSD) of the PPDU. Decreasing the PSD of the PPDU may enable the device (e.g., AP or STA) sending (e.g., transmitting) the PPDU to operate in spectrum parts having more stringent PSD requirements. Expanded unlicensed use of the 6 Gigahertz Band, for example, may permit operation over an additional 1.2 GHz of bandwidth (e.g., operating bands U-NII-5 (5.925-6.425 GHz), U-NII-6 (6.425-6.525 GHz), U-NII-7 (6.525-6.875 GHz), and U-NII-8 (6.875-7.125 GHz)) under low power indoor (LPI) PSD requirements (e.g., 5 dBm/MHz for an AP and -1dBm/MHz for a STA). Alternatively, or additionally, the device may leverage the lower PSD resulting from the use of distributed RUs, for example, to increase the transmit power of the PPDU. Increasing the transmit power may be particularly useful in UL MU OFDMA, for example, to allow each transmitting STA to boost the transmit power. The boost in transmit power may, for example, result in higher received powers for all tones and may significantly enhance overall spectrum efficiency.

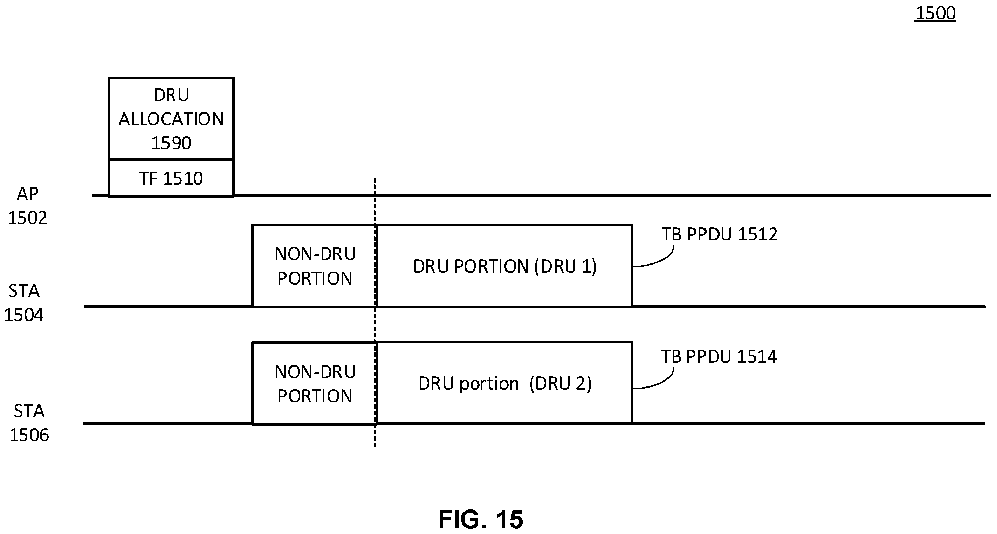

FIG. 15 shows an example 1500 of an operation using distributed RUs. As shown in FIG. 15, example 1500 may include an AP 1502 and STAs 1504 and 1506. AP 1502 may belong to a first BSS. STAs 1504 and 1506 may be associated with AP 1502 and may thus belong to the first BSS.

Example 1500 may begin with AP 1502 sending (e.g., transmitting) a trigger frame 1510. Trigger frame 1510 may solicit an uplink MU transmission from STAs 1504 and 1506. The uplink MU transmission may comprise simultaneous transmissions by STAs 1504 and 1506 of respective TB PPDUs 1512 and 1514. The uplink MU transmission may be associated with a frequency channel bandwidth over which TB PPDUs 1512 and 1514 may be transmitted. Trigger frame 1510 may comprise an RU allocation for STAs 1504 and 1506, for example, to send (e.g., transmit) TB PPDUs 1512 and 1514 to AP 1502 (e.g., a DRU allocation 1590). DRU allocation 1590 may allocate one or more DRUs to each of STAs 1504 and 1506. DRU allocation 1590 may allocate a first DRU (e.g., DRU 1) to STA 1504 and a second DRU (e.g., DRU 2) to STA 1506. Each of DRU 1 and DRU 2 may comprise a non-contiguous set of tones that may be spread over the entire frequency channel bandwidth associated with the uplink MU transmission.

STAs 1504 and 1506 may respectively send (e.g. transmit) TB PPDUs 1512 and 1514, for example, after or in response to trigger frame 1510. As shown in FIG. 15, TB PPDUs 1512 and 1514 may, for example, each comprise a non-distributed resource portion (non-DRU portion) and a distributed resource portion (DRU portion). The non-DRU portion of TB PPDU 1512 (or TB PPDU 1514) may comprise a preamble portion of TB PPDU 1512 (or TB PPDU 1514). The DRU portion of TB PPDU 1512 (or TB PPDU 1514) may comprise a data portion (comprising a data field) of TB PPDU 1512 (or TB PPDU 1514). TB PPDUs 1512 and 1514 may have a format as shown by TB PPDU 1604 described further below with respect to FIG. 10. The non-DRU and DRU portions of TB PPDU 1512 (or TB PPDU 1514) may, for example, correspond respectively to the non-DRU portion and the DRU portion of TB PPDU 1604.

The DRU portions of TB PPDUs 1512 and 1514 may be sent (e.g., transmitted) over respectively DRU 1 and DRU 2 as may be indicated by trigger frame 1510. The non-DRU portion of TB PPDU 1512 (and/or TB PPDU 1514) may, for example, be sent (e.g., transmitted) over one or more non-DRUs. The one or more non-DRUs may correspond respectively to one or more contiguous sets of resources. The one or more contiguous sets of resources may cover respectively one or more parts of the frequency channel bandwidth of the uplink MU transmission. The one or more non-DRUs may be as shown in FIG. 13 described herein. The non-DRU portions of TB PPDUs 1512 and 1514 may, for example, be sent (e.g., transmitted) over the same or frequency overlapping non-DRUs. The non-DRU portions of TB PPDUs 1512 and 1514 may, for example, be sent (e.g., transmitted) over different or frequency non-overlapping non-DRUs. Trigger frame 1510 may, for example, indicate the one or more non-DRUs for transmission of the non-DRU portions of TB PPDUs 1512 and 1514. The non-DRU portions of TB PPDUs 1512 and 1514 may, for example, be sent (e.g., transmitted) over the entire frequency channel bandwidth of the uplink MU transmission.

The frequency channel bandwidth may comprise one or more first frequency blocks and one or more second frequency blocks. The one or more first frequency block may comprise non-DRUs/RRUs. The one or more second frequency block may comprise DRUs. A first frequency block of the one or more first frequency blocks may be similar to the frequency bandwidth shown in FIG. 13. A second frequency block of the one or more second frequency blocks may be similar to the frequency bandwidth shown in FIG. 14. The frequency channel bandwidth may comprise a third frequency block. The third frequency block may comprise punctured RUs (i.e., on which no transmissions may be performed) for collision avoidance or as mandated by federal regulations. A 160 MHz frequency channel bandwidth may, for example, include the one or more second frequency blocks in the first 80 MHz, the one or more first frequency blocks in the next 40 MHz, and the third frequency block in the last 40 MHz of the 160 MHz frequency channel bandwidth.

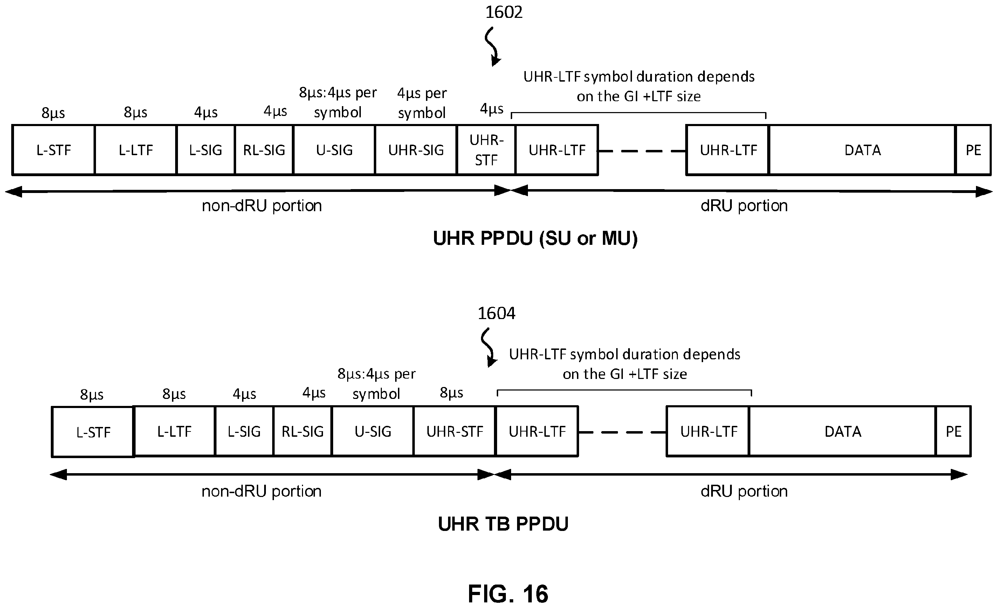

FIG. 16 shows example PPDUs. PPDUs (e.g., 1602 and 1604) may be used by Ultra-High Reliability (UHR) devices (devices implementing the IEEE 802.11bn standard amendment). Fig. 16 shows two UHR PPDUs: a UHR PPDU shown by UHR PPDU 1602 and a UHR trigger-based (TB) PPDU shown by UHR TB PPDU 1604.

UHR PPDU 1602 may be used for transmission to one or more users. UHR PPDU 1602 may be referred to as a UHR single user (SU) PPDU, for example, if/when used to send (e.g., transmit) to a single user. UHR PPDU 1602 may be referred to as a UHR multi-user (MU) PPDU, for example, if/when used to send (e.g., transmit) to multiple users. UHR PPDU 1602 may include a Legacy Short Training field (L-STF), a Legacy Long Training field (L-LTF), a Legacy Signal field (L-SIG), a Repeated Legacy Signal field (RL-SIG), a Universal Signal field (U-SIG), a UHR Signal field (UHR-SIG), a UHR Short Training field (UHR-STF), one or more UHR Long Training field (UHR-LTF), a data field, and a packet extension (PE) field.

The L-STF, L-LTF, L-SIG, RL-SIG, U-SIG, and UHR-SIG fields may be referred to as pre-UHR (or non-UHR) modulated fields. The UHR-STF, one or more UHR-L TF, data, and PE fields may be referred to as UHR modulated fields. The pre-UHR modulated fields and the UHR-STF may, for example, be modulated/encoded/sent (e.g., transmitted) onto a non-distributed RU and may be referred to as the non-DRU portion of UHR PPDU 1602. The one or more UHR-LTF, data field, and PE field may be modulated/encoded/sent (e.g., transmitted) onto a distributed RU and may be referred to as the DRU portion of UHR PPDU 1602.

UHR TB PPDU 1604 may be used by a STA for transmission, for example, after or in response to a triggering frame from an AP. The triggering frame may be a Trigger Frame (TF) control frame or any frame carrying a Triggered Response Scheduling Control subfield.

UHR TB PPDU 1604 may include an L-STF, an L-LTF, an L-SIG, an RL-SIG, a U-SIG, a UHR-STF, one or more UHR-LTF, a data field, and a PE field. UHR-SIG field may not be present, for example, in UHR TB PPDU 1604. UHR-SIG field may be present, for example, in UHR PPDU 1602. The duration of the UHR-STF in UHR TB PPDU 1604 may be twice the duration of the UHR-STF in UHR PPDU 1602.

The L-STF, L-LTF, L-SIG, RL-SIG, and U-SIG fields may be referred to as pre-UHR (or non-UHR) modulated fields. The UHR-STF, one or more UHR-LTF, data field, and PE field may be referred to as UHR modulated fields. The pre-UHR modulated fields and the UHR-STF may, for example, be modulated/encoded/sent (e.g., transmitted) onto a non-distributed RU and may be referred to as the non-DRU portion of UHR PPDU 1604. The one or more UHR-LTF, data field, and PE field may, for example, be modulated/encoded/sent (e.g., transmitted) onto a distributed RU and may be referred to as the DRU portion of UHR TB PPDU 1604.

The proposal to use non-DRU modulation for the UHR-STF of UHR PPDUs 1602 and 1604 may follow the same approach used in PPDUs introduced in the IEEE 802.11ax standard amendment (e.g., HE SE PPDU 610, HE MU PPDU 620, HE ER SU PPDU 630, and HE TB PPDU 810) and in PPDUs introduced in the IEEE 802.11be standard amendment (e.g., EHT MU PPDU 710 and EHT TB PPDU 820). The reason behind this approach may be to avoid the complexity associated with extending DRU modulation to the UHR-STF. Properties of the STF may require that the STF have a tone spacing that may be four times wider than a tone spacing of the data field. The HE/EHT-STF may have a tone spacing of 312.5 kHz and the HE/EHT data field may have a tone spacing of 78.125 kHz. The tone spacing of the data field may be sparser (e.g., 9 times, 18 times, or 36 times) than the regular tone spacing of 78.125 kHz (i.e. 703.125 kHz, 1405.25 kHz, or 2812.5 kHz), for example, if/when DRU modulation may be used for the data field (e.g., as in UHR PPDUs 1602 and 1604). The tone spacing of the UHR-STF may need to be sparser (e.g., 36 times, 72 times, or 144 times) than the regular tone spacing of 78.125 kHz (i.e., 2812.5 kHz, 5621 kHz, or 11250 kHz), for example, if/when DRU modulation may be used for the UHR-STF. The sparseness may greatly increase the design complexity of the tone plan of the UHR-STF.

The combination of non-DRU modulation for the UHR-STF with DRU modulation for the UHR-LTF and data fields may result in high variability in the receive power of PPDU. The high variability may cause automatic gain control (AGC) setting difficulties at the receiver. Non-DRU modulation may be used for the UHR-STF. Unintentional beamforming may arise for the UHR-STF, for example, if/ when multiple versions of the UHR-STF may be sent (e.g., transmitted) simultaneously from multiple antennas (e.g., from a single user in an UL SU-MIMO or from multiple users in an UL MU-MIMO as shown in FIG. 12 or FIG. 15). The receive power of the UHR-STF may vary significantly relative to the receive power of the UHR-LTF or data field at the receiver. The receiver power of the UHR-STF may be lower than the receiver power of the UHR-LTF or data field. The lower receiver power may lead to the AGC gain (determined based on the UHR-STF) to saturate the UHR-LTF or data field signal. The receive power of the UHR-STF may be higher than the receive power of the UHR-LTF or data field. The higher receive power may lead to the AGC gain (determined based on the UHR-STF) to attenuate the UHR-LTF or data field signal.

The IEEE 802.11bn standard amendment proposes using cyclic shift diversity (CSD) for the UHR-STF, for example, to mitigate unintentional beamforming for the UHR-STF. Respective cyclic shift values may be used for simultaneously sent (e.g., transmitted) signals, for example, in CSD. The cyclic shift values may be designed to minimize the correlation between the sent (e.g., transmitted) signals. The used CSD may be global, for example, if/ when the sent (e.g., transmitted) signals may be sent (e.g., transmitted) by multiple users. Local CSD may be used, for example, if/when the sent (e.g., transmitted) signals may be sent (e.g., transmitted) by a single user for example.

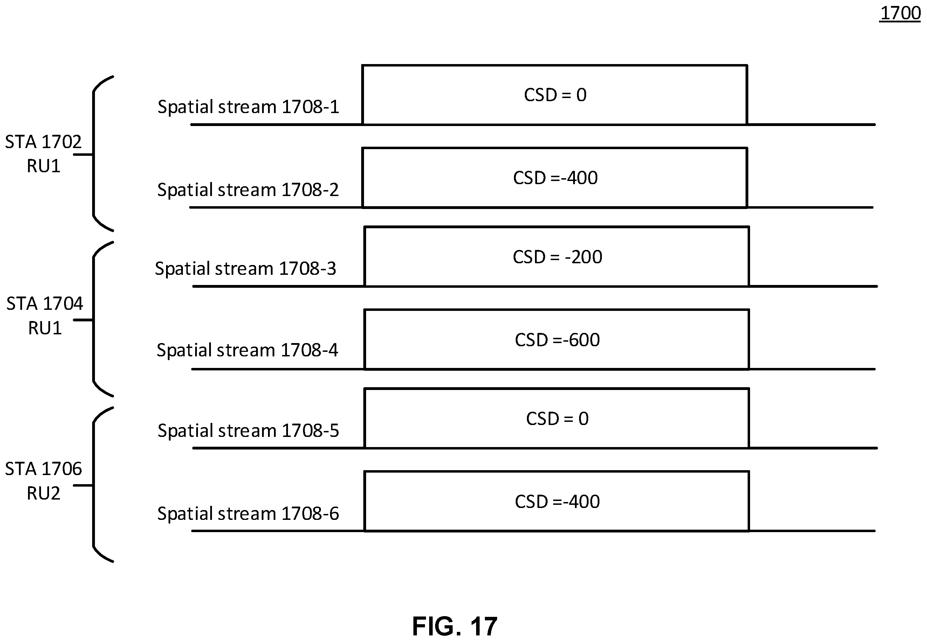

FIG. 17 shows an example 1700 of global CSD and local CSD. As shown in FIG. 17, example 1700 may include STAs 1702, 1704, and 1706. Each of STAs 1702, 1704, and 1706 may comprise a plurality (e.g., two) antennas. STAs 1702, 1704, and 1706 may be associated with an AP (not shown in FIG. 17). STAs 1702, 1704, and 1706 may send (e.g., transmit) spatial streams simultaneously to the AP. STA 1702 may send (e.g., transmit) spatial streams 1708-1 and 1708-2 via a first RU (RU1). STA 1704 may send (e.g., transmit) spatial streams 1708-3 and 1708-4 via the first RU. STA 1706 may send (e.g., transmit) spatial streams 1708-5 and 1708-6 via a second RU (RU2). Spatial streams 1708-1 to 1708-6 may be associated with respective PPDUs sent (e.g., transmitted) by STAs 1702, 1704, and 1706, for example, in response to a trigger frame (as shown in FIG. 12 or FIG. 15). Spatial streams 1708-1 to 1708-6 may send (e.g., transmit) the same information simultaneously, for example, in at least a portion of the transmission time. Spatial streams 1708-1 to 1708-6 may each comprise a non-DRU portion and a DRU portion as shown in FIG. 16. At least the non-DRU portions of spatial streams 1708-1 to 1708-6 may be identical.

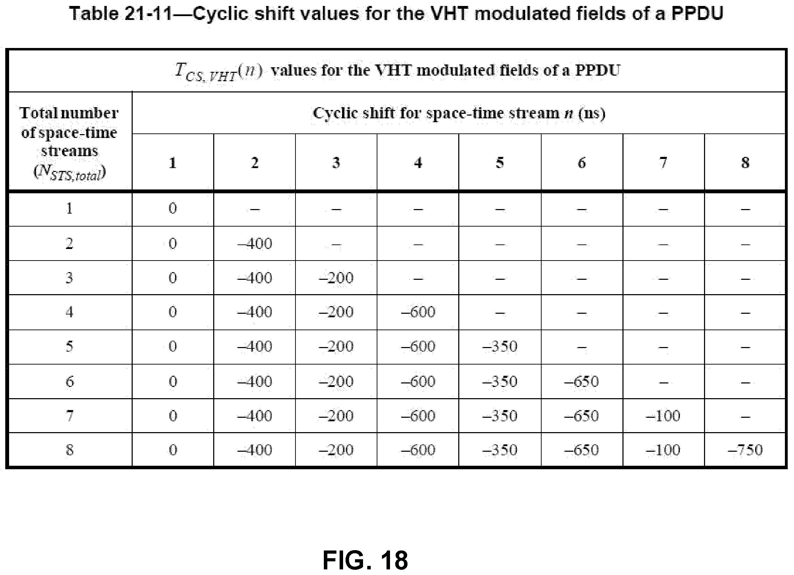

STAs 1702 and 1704 may use the same RU (RU1) to send (e.g., transmit) their respective spatial streams. Unintentional beamforming may arise, for example, if/when identical portions of spatial streams 1708-1, 1708-2, 1708-3, and 1708-4 may be sent (e.g., transmitted) simultaneously. The identical portions of spatial streams 1708-1, 1708-2, 1708-3, and 1708-4 may comprise the same UHR-STF. Global CSD may use a different cyclic shift value for each of the identical portions of spatial streams 1708-1, 1708-2, 1708-3, and 1708-4, for example, to mitigate unintentional beamforming. A different cyclic shift value may be used to the UHR-STF in each of spatial streams 1708-1, 1708-2, 1708-3, and 1708-4 (where the UHR-STF may be sent (e.g., transmitted) duplicatively and simultaneously in spatial streams 1708-1, 1708-2, 1708-3, and 1708-4). As shown in FIG. 17, different cyclic shift values of 0, -400, -200, and - 600 may be used respectively to the identical portions of spatial streams 1708-1, 1708-2, 1708-3, and 1708-4. The different cyclic shift values may be selected from a table of cyclic shift values as described below in FIG. 18.

Unintentional beamforming may only arise due to identical portions of spatial streams 1708-5 and 1708-6 both sent (e.g., transmitted) by STA 1706, for example, with only STA 1706 using the second RU (RU2). Local CSD may use a different cyclic shift value (e.g., 0, -400) for each of the identical portions of spatial streams 1708-5 and 1708-6, for example, to mitigate unintentional beamforming. The same cyclic shift values, with local CSD, may be used for different STAs, for example, as the cyclic shift values used for a given STA may be determined independently from the cyclic shift values used for another STA. As shown in FIG. 17, local CSD may use cyclic shift values 0 and -400 respectively to the identical portions of spatial streams 1708-5 and 1708-6. The same cyclic shift values (0, -400) may be used for spatial streams 1708-1 and 1708-2 sent (e.g., transmitted) by STA 1702 as part of a global CSD scheme.

FIG. 18 shows a table of cyclic shift values. The cyclic shift values may be used for VHT modulated fields of a VHT PPDU. Similar cyclic shift values may be used for HE-modulated fields (e.g., HE-STF, HE-LTF, and Data field) of an HE PPDU, EHT-modulated fields (e.g., EHT-STF, EHT-LTF, and Data field) of an EHT PPDU, or UHR-modulated fields (e.g., UHR-STF, UHR-LTF, and Data field) of a UHR PPDU.

As shown in FIG. 18, the table may provide the cyclic shift value (in nanoseconds) to be used for space-time stream *n* as a function of the total number of space-time streams (*N_{STS, total}*) in the PPDU. A cyclic shift of 0 (i.e., no cyclic shift) may be used for the space-time stream (cyclic shift = 0), for example, if/ when the PPDU may include a single space-time stream (i.e., *N_{STS, total} =* 1). A cyclic shift of 0 may be used for the first space-time stream and a cyclic shift of -400 may be used for the second space-time stream, for example, if/when the PPDU may include two space-time streams (i.e., *N_{STS, total}* = 2). A total of 8 space-time streams may be supported using the table of FIG. 18. The number of space-time streams for a user may be equal to the number of spatial streams for the user, for example, if/when space-time block coding may be off. The number of space-time streams for a user may be twice the number of spatial streams for the user, for example, if/when space-time block coding may be on. It may be assumed herein that space-time block coding may be off and the number of space-time streams for a user may be equal to the number of spatial streams for the user (i.e., space-time streams and spatial streams may be equivalent).

The PPDU may include spatial streams sent (e.g., transmitted) by a single user or by multiple users as described herein. The STA sending (e.g., transmitting) the PPDU may use a respective cyclic shift value to each spatial stream of the PPDU, for example, in an SU PPDU or an MU PPDU transmission (i.e., non-TB PPDU). Each transmitting STA (user) may use a different set of cyclic shift values for its respective spatial streams, for example, in a UL MU-MIMO transmission (i.e., TB PPDU). STA 1702 may use the first and second cyclic shift values (0, -400) for spatial streams 1708-1 and 1708-2, respectively, and STA 1704 may use the third and fourth cyclic shift values (-200, -600) for spatial streams 1708-3 and 1708-4, for example, in the UL MU-MIMO transmission by STAs 1702 and 1704. The cyclic shift values that may be by a transmitting STA for an UL MU-MIMO transmission may depend on the position of the STA relative to another transmitting STA of the UL MU-MIMO transmission. UL MU-MIMO may support a maximum of 8 spatial streams across all users. The table of FIG. 18 may provide a sufficient number of cyclic shift values for any UL MU-MIMO transmission.

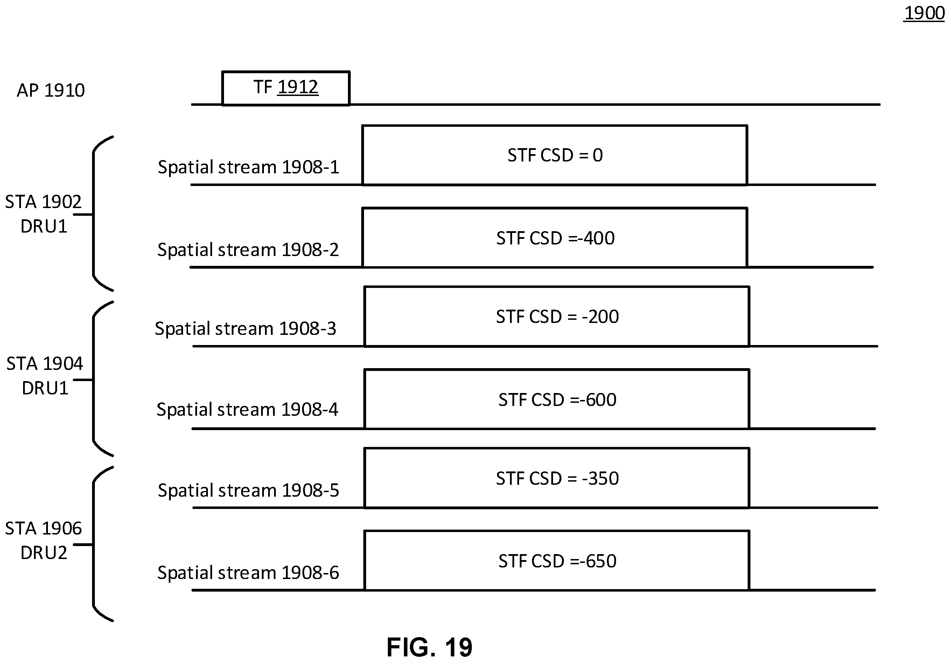

FIG. 19 shows an example 1900 of CSD for the uplink transmission of spatial streams. The CSD for the uplink transmission of spatial streams may comprise both a non-DRU portion and a DRU portion. As shown in FIG. 19, example 1900 may include STAs 1902, 1904, and 1906 and an AP 1910. Each of STAs 1902, 1904, and 1906 may comprise a plurality (e.g., two) antennas. STAs 1902, 1904, and 1906 may be associated with AP 1910.

Example 1900 may include AP 1910 sending (e.g., transmitting) a trigger frame 1912 to STAs 1902, 1904, and 1906. Trigger frame 1912 may allocate uplink resources to STAs 1902, 1904, and 1906 for an uplink transmission by STAs 1902, 1904, and 1906. Trigger frame 1912 may allocate a first DRU (DRU1) to STAs 1902 and 1904. Trigger frame 1912 may allocate a second DRU (DRU2) to STA 1906. The first DRU (DRU1) and the second DRU (DRU2) may be located in a distribution/spreading bandwidth (as shown in FIG. 14). Trigger frame 1912 may indicate an uplink bandwidth for the uplink transmission by STAs 1902, 1904, and 1906. The first DRU may correspond to the odd tones of the uplink bandwidth. The second DRU may correspond to the even tones of the uplink bandwidth. The uplink bandwidth may correspond to the spreading/distribution bandwidth within which the first DRU (DRU1) and the second DRU (DRU2) may be located.

STAs 1902, 1904, and 1906 may respond to trigger frame 1912 from AP 1910, for example, by sending (e.g., transmitting) respective PPDUs (not shown in FIG. 19) (e.g., a SIFS after receiving trigger frame 1912). Each PPDU may comprise one or more respective spatial stream. The PPDU may be a UHR PPDU as shown by UHR TB PPDU 1604. The spatial stream may comprise the UHR-modulated fields (e.g., UHR-STF, UHR-LTF, and Data field) of the UHR PPDU. STA 1902 may send (e.g., transmit) a PPDU that may comprise spatial streams 1908-1 and 1908-2. STA 1904 may send (e.g., transmit) a PPDU that may comprise spatial streams 1908-3 and 1908-4. STA 1906 may send (e.g., transmit) a PPDU that may comprise spatial streams 1908-5 and 1908-6.

Each of spatial streams 1908-1 to 1908-6 may comprise a non-DRU portion and DRU portion. The non-DRU portion (or the non-DRU modulated portion) may comprise the STF (e.g. UHR-STF) of the PPDU (comprising the spatial stream). The DRU portion (or the DRU modulated portion) may comprise the LTF (e.g. UHR-LTF) and Data fields of the PPDU. The PPDU may be a UHR PPDU as shown by UHR TB PPDU 1604. The non-DRU portion of the spatial stream may comprise the UHR-STF. The DRU portion of the spatial stream may comprise the UHR-LTF and Data fields of the UHR PPDU. The non-DRU portion of the spatial stream may be modulated on the entire uplink bandwidth (i.e., on all of the tones of the uplink bandwidth). The respective non-DRU portions of spatial streams 1908-1 to 1908-6 may be modulated on the entire uplink bandwidth that may be indicated in trigger frame 1912. The DRU portion of the spatial stream may be modulated on the DRU allocated to the STA sending (e.g., transmitting) the spatial stream. The respective DRU portions of spatial streams 1908-1, 1908-2, 1908-3, and 1908-4 may be modulated on DRU1 allocated to STAs 1902 and 1904. The DRU portions of spatial streams 1908-5 and 1908-6 may be modulated on DRU2 allocated to STA 1906.

The respective non-DRU portions of spatial streams 1908-1 to 1908-6 may be modulated on the same tones. Unintentional beamforming (due to the simultaneous transmission, on the same frequency resource, of identical portions of the respective non-DRU portions of spatial streams 1908-1 to 1908-6) may be mitigated, for example, by using a unique cyclic shift value for each non-DRU portion of the respective non-DRU portions of spatial streams 1908-1 and 1908-6 (i.e., global CSD). As shown in FIG. 19, a unique cyclic shift value may be used for each STF of the respective STFs of spatial streams 1908-1 and 1908-6.

The global CSD scheme used for the respective non-DRU portions of spatial streams 1908-1 to 1908-6 may be independent of the CSD scheme(s) that may also be used for the DRU portions of spatial streams 1908-1 to 1908-6. CSD may be used to mitigate unintentional beamforming between DRU portions of spatial streams 1908-1 to 1908-6, for example, as the DRU portions of spatial streams 1908-1 to 1908-6 may be modulated onto the same DRU(s). In example 1900, the respective DRU portions of spatial streams 1908-1 to 1908-4 may be modulated on the same tones of DRU1. The respective DRU portions of spatial streams 1908-5 and 1908-6 may be modulated on the same tones of DRU2. A global CSD scheme may be used for the DRU portions of spatial streams 1908-1 to 1908-1, for example, to avoid unintentional beamforming between spatial streams 1908-1 to 1908-4. A local CSD scheme may be used for the DRU portions of spatial streams 1908-5 and 1908-6, for example, to avoid unintentional beamforming between spatial streams 1908-5 and 1908-6.

A maximum of 8 spatial streams across all users may be supported, for example, in UL MU-MIMO. Global CSD (e.g., using the table of FIG. 18) may be used without risk of duplicating the cyclic shift values for different spatial streams. The number of spatial streams may exceed the maximum number of spatial streams that may be supported using global CSD, for example, in an UL OFDMA transmission (and/or in a transmission combining UL OFDMA and UL MU-MIMO as in example 1900).

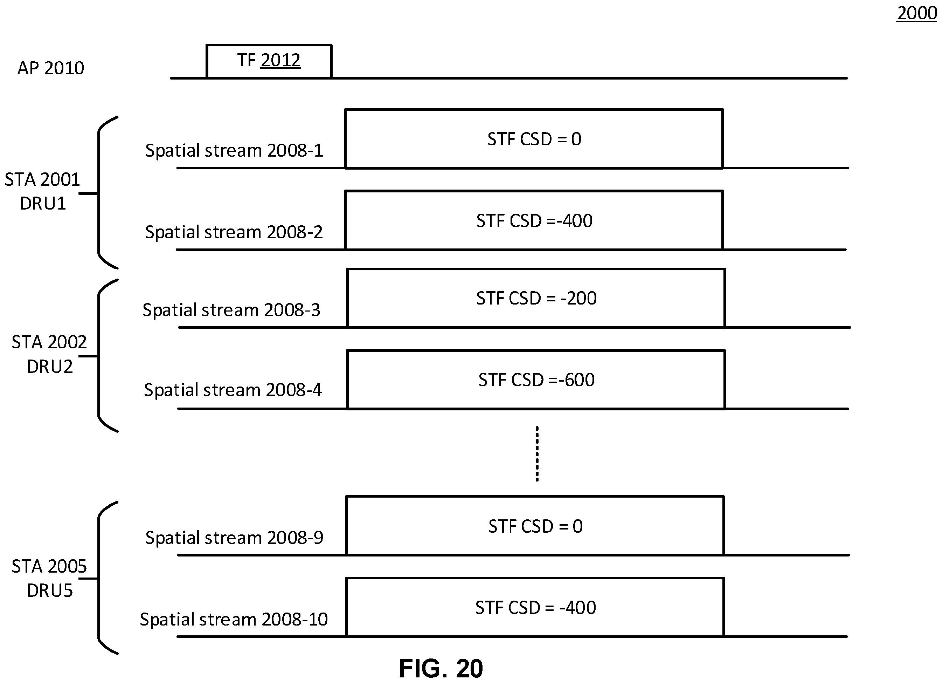

FIG. 20 shows an example of global CSD. More specifically, FIG. 20 shows an example that shows a problem that may arise with the use of global CSD for uplink (UL) orthogonal frequency division multiple access (OFDMA) transmission. Example 2000 may include STAs 2001-2005 and an AP 2010. Each of STAs 2001-2005 may comprise a plurality (e.g., two) antennas. STAs 2001-2005 may be associated with AP 2010. Example 2000 may include AP 2010 sending (e.g., transmitting) a trigger frame 2012 to STAs 2001-2005. Trigger frame 2012 may allocate uplink resources to STAs 2001-2005 for an uplink transmission by STAs 2001-2005. Trigger frame 2012 may allocate a respective DRU to each of STAs 2001-2005 (e.g., DRU1 to STA 2001, DRU2 to STA 2002, DRU3 to STA 2003, DRU4 to STA 2004, and DRU5 to STA 2005). DRUs 1-5 may be located in a distribution/spreading bandwidth as shown in FIG. 14. Trigger frame 2012 may indicate an uplink bandwidth for the uplink transmission by STAs 2001-2005. The uplink bandwidth may correspond to the spreading/distribution bandwidth within which DRUs 1-5 may be located.

STAs 2001-2005 may respond to trigger frame 2012 from AP 2010 by sending (e.g., transmitting) respective PPDUs (not shown in FIG. 20) (e.g., a SIFS after receiving trigger frame 2012). Each PPDU may comprise one or more respective spatial stream. STA 2001 may send (e.g., transmit) a PPDU that may comprise spatial streams 2008-1 and 2008-2. STA 2102 may send (e.g., transmit) a PPDU that may comprise spatial streams 2008-3 and 2008-4. STA 2105 may send (e.g., transmit) a PPDU that may comprise spatial streams 2008-9 and 2008-10.

Each of spatial streams 2008-1 to 2008-10 may comprise a non-DRU portion and DRU portion. The non-DRU portion (or the non-DRU modulated portion) may comprise the STF of the PPDU. The STF of the PPDU may comprise the spatial stream. The DRU portion (or the DRU modulated portion) may comprise the LTF and Data fields of the PPDU. The PPDU may comprise the spatial stream and may be a UHR PPDU as shown by UHR TB PPDU 1604. The non-DRU portion of the spatial stream may comprise the UHR-STF of the UHR PPDU. The DRU portion of the spatial stream may comprise the UHR-LTF and Data fields of the UHR PPDU.

The DRU portion of the spatial stream may be modulated on the DRU allocated to the STA sending (e.g., transmitting) the spatial stream. The respective DRU portions of spatial streams 2008-1 and 2008-2 may be modulated on DRU1 allocated to STA 2001. The respective DRU portions of spatial streams 2008-3 and 2008-4 may be modulated on DRU2 allocated to STA 2002. The respective DRU portions of spatial streams 2008-9 and 2008-10 may be modulated on DRU5 allocated to STA 2005. Local CSD may be used for the DRU portions of spatial streams sent (e.g., transmitted) on the same DRU.

The non-DRU portion of the spatial stream may be modulated on the entire uplink bandwidth (i.e., on all of the tones of the uplink bandwidth). The respective non-DRU portions of spatial streams 2008-1 to 2008-10 may be modulated on the entire uplink bandwidth indicated in trigger frame 2012. Global CSD may thus be needed, for example, to avoid unintentional beamforming. Some of the cyclic shift values may need to be duplicated for different spatial streams, for example, with global CSD supporting a maximum of 8 cyclic shift values. As shown in example 2000, the same cyclic shift value (e.g., 0) may, for example, be used for the respective non-DRU portions of both spatial stream 2008-1 sent (e.g., transmitted) by STA 2001 and spatial stream 2008-9 sent (e.g., transmitted) by STA 2005. The same cyclic shift value (e.g., -400) may be used for the respective non-DRU portions of both spatial stream 2008-2 sent (e.g., transmitted) by STA 2001 and spatial stream 2008-10 sent (e.g., transmitted) by STA 2005. Unintentional beamforming between the respective non-DRU portions of the spatial streams of STAs 2001 and 2005 may thus not be avoided. Unintentional beamforming may arise between the STFs of spatial streams 2008-1 and 2008-0 and the STFs of spatial streams 2008-2 and 2008-10. As described herein, this may cause AGC setting difficulties at the receiver of AP 2010.

An example solution to this problem may include the use of a CSD table with more than 8 cyclic shift values. Aa CSD table may contain 9*80/20*4=144 cyclic shift values and may be necessary to prevent unintentional beamforming, for example, with an 80 MHz PPDU with up to 4 spatial streams per user (and 9 26-tone DRU per 20 MHz). This may increase the complexity and the storage requirements of the CSD table. Additionally, with such a large number of cyclic shift values, Adjacent values of the CSD table may be very narrowly separated (e.g., 800ns/144 = 6 ns), for example, with such a large number of cyclic shift values. The narrow separation may, for example, result in a poor CSD performance.

Examples provided herein may provide improvements for reducing unintentional beamforming. A first STA may send (e.g., transmit) to a second STA a first frame. The first frame may comprise an indication to distribute/divide an uplink bandwidth, for example, for transmission of an STF of the PPDU. The first STA may comprise an AP STA. The uplink bandwidth may be a bandwidth of the PPDU or a spreading/distribution bandwidth. The first STA may receive, from the second STA, a first spatial stream of the PPDU carrying, via a first set of tones of the uplink bandwidth, a first version of the STF, for example, based on the indication. The first STA may receive, from the second STA, a second spatial stream of the PPDU carrying, via a second set of tones of the uplink bandwidth, a second version of the STF, for example, based on the indication. The second STA may use the same cyclic shift value for the first version of the STF and the second version of the STF, for example, based on distributing the uplink bandwidth to send (e.g., transmit) the STF. The second STA may use the same cyclic shift value for the first version of the STF and the second version of the STF, for example, without risking unintentional beamforming between the first version of the STF and the second version of the STF. The cyclic shift value may be used for the STF by the second STA and may be unique to the second STA. This may reduce unintentional beamforming between the first/second version of the STF sent (e.g., transmitted) by the second STA and a third version of the STF sent (e.g., transmitted) simultaneously by a third STA (on the first/second tones of the uplink bandwidth). The required number of cyclic shift values may be significantly reduced (e.g., from 144 to 36), for example, with a single unique cyclic shift value per user for the STF (regardless of the number of spatial streams sent (e.g., transmitted) by the user).

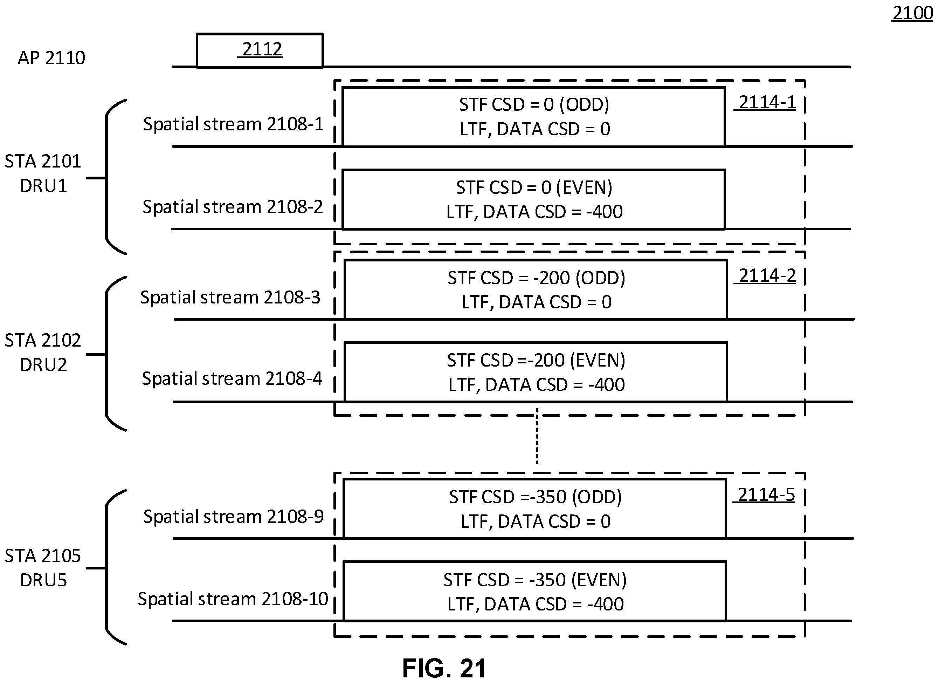

FIG. 21 shows an example 2100 of tone distribution. As shown in FIG. 21, example 2100 may include STAs 2101-2105 and an AP 2110. Each of STAs 2101-2105 may comprise a plurality (e.g., two, four, etc.) of antennas. STAs 2101-2105 may be associated with AP 2110. As would be understood by a person of skill in the art based on the teachings herein, example 2100 may be provided for exemplary reasons and may not be limited to these examples. The number of STAs may, for example, be lower than or greater than 5.

Example 2100 may include AP 2110 sending (e.g., transmitting) a frame 2112 to STAs 2101-2105. Frame 2112 may allocate uplink resources to STAs 2101-2105 for an uplink transmission by STAs 2101-2105. Frame 2112 may allocate a respective DRU to each of STAs 2101-2105 (e.g., DRU1 to STA 2101, DRU2 to STA 2102, DRU3 to STA 2103, DRU4 to STA 2104, and DRU5 to STA 2105). The DRUs 1-5 may, for example, be located in a distribution/spreading bandwidth, as shown in FIG. 14. Frame 2112 may indicate an uplink bandwidth for the uplink transmission by STAs 2101-2105. The uplink bandwidth may, for example, be equal to 40 MHz, 80 MHz, 160 MHz, or 320 MHz. The uplink bandwidth may correspond to the spreading/distribution bandwidth within which DRUs 1-5 may be located. Frame 2112 may comprise a trigger frame.

STAs 2101-2105 may respond to frame 2112 from AP 2110 by sending (e.g., transmitting) respective PPDUs (e.g., a SIFS after receiving frame 2112). Each PPDU may comprise one or more respective spatial stream. STA 2101 may send (e.g., transmit) PPDU 2114-1 comprising spatial streams 2108-1 and 2108-2. STA 2102 may send (e.g., transmit) PPDU 2114-2 comprising spatial streams 2108-3 and 2108-4. STA 2105 may send (e.g., transmit) PPDU 2114-5 comprising spatial streams 2108-9 and 2108-10.

Each of spatial streams 2108-1 to 2108-10 may comprise a first portion and a second portion. The first portion may be a DRU portion. The second portion may be a distributed bandwidth portion. The DRU portion (or the DRU modulated portion) may comprise the LTF and Data fields of the PPDU which may comprise the spatial stream. The distributed bandwidth portion may comprise the STF of the PPDU which may comprise the spatial stream. The PPDU which may comprise the spatial stream, for example, may be a UHR PPDU as shown by UHR TB PPDU 1604. The DRU portion of the spatial stream may comprise the UHR-LTF and Data fields of the UHR PPDU. The distributed bandwidth portion of the spatial stream may comprise the UHR-STF of the UHR PPDU.

The DRU portion of the spatial stream may be modulated on the DRU allocated to the STA sending (e.g., transmitting) the spatial stream. The respective DRU portions of spatial streams 2108-1 and 2108-2 may be modulated on DRU1 allocated to STA 2101. The respective DRU portions of spatial streams 2108-3 and 2108-4 may be modulated on DRU2 allocated to STA 2102. The respective DRU portions of spatial streams 2108-9 and 2108-10 may be modulated on DRU5 allocated to STA 2105. Local CSD may be used for the DRU portions modulated/sent (e.g., transmitted) on the same DRU, for example, to mitigate unintentional beamforming. As shown in FIG. 21, local CSD may be used for the LTF and Data fields of spatial streams 2108-1 and 2108-2. Local CSD may, for example, use a cyclic shift value of 0 for the LTF and Data fields of spatial stream 2108-1 and a cyclic shift value of -400 to the LTF and Data fields of spatial stream 2108-2. Local CSD (e.g., using the same cyclic shift values of 0 and -400) may be used for the LTF and Data fields of spatial streams 2108-3 and 2108-4, to the LTF and Data fields of spatial streams 2108-9 and 2108-10, etc.

The distributed bandwidth portion of the spatial stream may be modulated on a tone distribution of the uplink bandwidth indicated in frame 2112. The STA sending (e.g., transmitting) the spatial stream may determine the tone distribution for the distributed bandwidth portion of the spatial stream, for example, based on a number of spatial streams (N) being sent (e.g., transmitted) by the STA. The tone distribution may correspond to every tone of the uplink bandwidth, for example, if/when the STA may be sending (e.g., transmitting) a single spatial stream (N=1). The tone distribution may correspond to every other tone of the uplink bandwidth, for example, if/when the STA may be sending (e.g., transmitting) two spatial streams (N=2).

STA 2101 may determine a first tone distribution, for example, based on STA 2101 sending (e.g., transmitting) two spatial streams 2108-1 and 2108-2. STA 2101 may determine a first tone distribution for the distributed bandwidth portion of spatial stream 2108-1 as corresponding to every other tone of the uplink bandwidth. The first tone distribution for the distributed bandwidth portion of spatial stream 2108-1 may start from a lowest frequency tone among the tones of the uplink bandwidth. The first tone distribution for the distributed bandwidth portion of spatial stream 2108-1 may start from a second lowest frequency tone among the tones of the uplink bandwidth. STA 2101 may determine a second tone distribution for the distributed bandwidth portion of spatial stream 2108-2. The second tone distribution may be the complement of the first tone distribution. The second tone distribution may comprise the tones of the uplink bandwidth not comprised in the first tone distribution. The first tone distribution may comprise the odd tones of the tones of the uplink bandwidth, and the second tone distribution may comprise the even tones of the tones of the uplink bandwidth, or vice versa. The first tone distribution and the second tone distribution may overlap in one or more tones. Some of the tones of the uplink bandwidth may be common to the first tone distribution and the second tone distribution.

Each of STAs 2101-2105 may determine respective tone distributions for the distributed bandwidth portions of its respective spatial streams, for example, as described herein for STA 2101. STAs sending (e.g., transmitting) the same number of spatial streams may determine identical tone distributions for their respective spatial streams. As shown in FIG. 21, each STAs 2101-2105 may each send (e.g., transmit) two spatial streams. Each of STAs 2101-2105 may determine a first tone distribution (e.g., corresponding to the odd tones of the uplink bandwidth) that the STA may use for the first of its two spatial streams and a second tone distribution (e.g., corresponding to even tones of the uplink bandwidth) that the STA may use for the second of its two spatial streams. STA 2101 may use the first tone distribution for the distributed bandwidth portion of spatial stream 2108-1 and the second tone distribution for the distributed bandwidth portion of spatial stream 2108-2. STA 2102 may use the first tone distribution for the distributed bandwidth portion of spatial stream 2108-3 and the second tone distribution for the distributed bandwidth portion of spatial stream 2108-4; and so on for STAs 2103, 2104, and 2105. STAs sending (e.g., transmitting) different number of spatial streams may determine different tone distributions for their respective spatial streams. The different tone distributions may or may not overlap with each other.

Each of STAs 2101-2105 may be assigned a unique cyclic shift value, for example, to use for the distributed bandwidth portions of its spatial streams. Each of STAs 2101-2105 may be assigned a unique cyclic shift value, for example, to reduce unintentional beamforming between distributed bandwidth portions modulated onto the same tone distribution (or onto partially overlapping tone distributions) of the uplink bandwidth. As shown in FIG. 21, STA 2101 may be assigned a cyclic shift value of 0 that STA 2101 may use for the distributed bandwidth portions of spatial streams 2108-1 and 2108-2. STA 2102 may be assigned a cyclic shift value of -200 that STA 2102 may use for the distributed bandwidth portions of spatial streams 2108-3 and 2108-4.

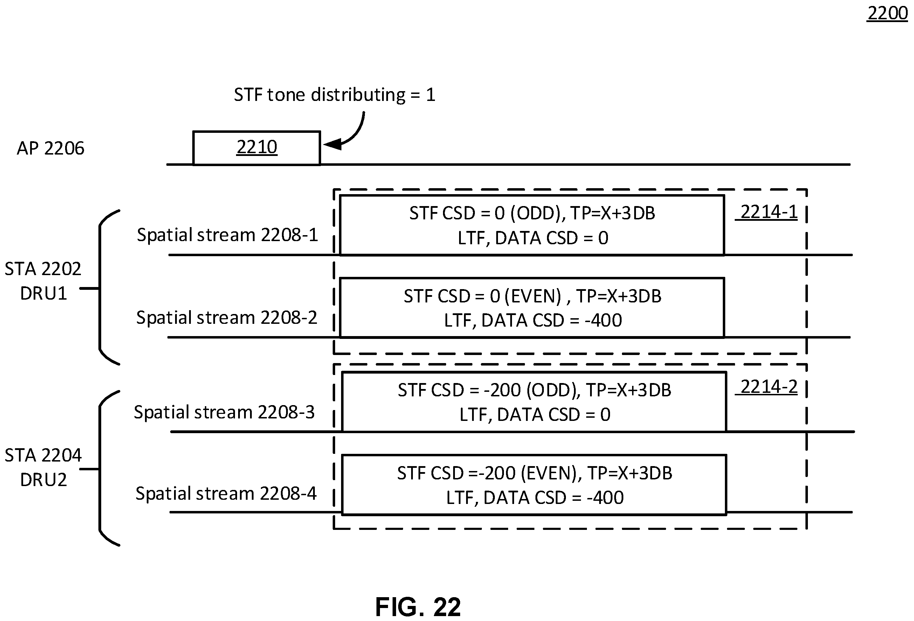

FIG. 22 shows another example 2200 of tone distribution. As shown in FIG. 22, example 2200 may include STAs 2202 and 2204 and an AP 2206. Each of STAs 2202 and 2204 may comprise a plurality (e.g., two, four, etc.) of antennas. STAs 2202 and 2204 may be associated with AP 2206. As would be understood by a person of skill in the art based on the teachings herein, example 2200 may be provided for exemplary reasons and may not be limited to these examples. The number of STAs may, for example, be lower than or greater than 2.

Example 2200 may begin with AP 2206 sending (e.g., transmitting) a frame 2210 to STAs 2202 and 2204. Frame 2210 may allocate uplink resources to STAs 2202 and 2204 for an uplink transmission by STAs 2202 and 2204. Frame 2210 may allocate a respective DRU to each of STAs 2202 and 2204 (e.g., DRU1 to STA 2202 and DRU2 to STA 2204). DRUs 1 and 2 may be located in a distribution/spreading bandwidth as shown in FIG. 14. Frame 2210 may indicate an uplink bandwidth for the uplink transmission by STAs 2202 and 2204. The uplink bandwidth may, for example, be equal to 40 MHz, 80 MHz, 160 MHz, or 320 MHz. The uplink bandwidth may correspond to the spreading/distribution bandwidth within which DRUs 1-2 may be located. Frame 2210 may comprise a trigger frame.

Frame 2210 may include a first indication that may indicate whether STA 2202 is to distribute the uplink bandwidth for transmission of an STF (or another field) of a PPDU to AP 2206. The PPDU may be a PPDU sent (e.g., transmitted) by STA 2202, for example, in response to frame 2210. Distributing the uplink bandwidth for transmission of the STF may comprise splitting tones of the uplink bandwidth into at least a first set of tones of the uplink bandwidth and a second set of tones of the uplink bandwidth. Distributing the uplink bandwidth for transmission of the STF may further comprise sending (e.g., transmitting) at least a first version of the STF (of a first spatial stream of the PPDU) via the first set of tones and a second version of the STF (of a second spatial stream of the PPDU) via the second set of tones. The first indication may be specific to STA 2202 or common to STAs 2202 and 2204. Only STA 2202 may act in accordance with the first indication to send (e.g., transmit) the PPDU to AP 2206, for example, if/when the first indication may be specific to STA 2202. Both STAs 2202 and 2204 may act in accordance with the first indication to send (e.g., transmit) respective PPDUs to AP 2206, for example, if/when the first indication may be common to STAs 2202 and 2204.

Frame 2210 may comprise a trigger frame as shown in FIG. 9. Frame 2210 may comprise a first user info field for STA 2202 and a second user info field for STA 2204. The first user info field may comprise a first RU allocation field that may indicateDRU1. The second user info field may comprise a second RU allocation field that may indicate DRU2. Frame 2210 may comprise a common info field as shown in FIG. 10. The uplink bandwidth may be indicated in an UL BW subfield of the common info field. The first indication may be provided in the first user info field of frame 2210, for example, if/when the first indication may be specific to STA 2202. The first indication may be provided in the common info field of frame 2210, for example, if/when the first indication may be common to STAs 2202 and 2204.

STA 2202 (or 2204) may send (e.g., transmit) to AP 2206 a frame, for example, prior to the transmission of frame 2210. The frame may indicate a capability of STA 2202 (or 2204) to distribute an uplink bandwidth for transmission of an STF. AP 2206 may send (e.g., transmit) frame 2210 to STA 2202 (or 2204), for example, based on the capability.

Frame 2210 may comprise a first indication that may be common to both STAs 2202 and 2204. A person of skill in the art would appreciate that examples described hereinafter may be readily extended to examples in which frame 2210 may comprise a respective first indication for each of STAs 2202 and 2204.

STAs 2202 and 2204 may respond to frame 2210 from AP 2206, for example, by sending (e.g., transmitting) respective PPDUs (e.g., a SIFS after receiving frame 2210). STA 2202 may send (e.g., transmit) a first PPDU 2214-1 comprising spatial streams 2208-1 and 2208-2. STA 2204 may send (e.g., transmit) a second PPDU 2214-2 comprising spatial streams 2208-3 and 2208-4.

STA 2202/2204 may send (e.g., transmit) the STF(s) as non-DRU portions of first PPDU 2214-1/second PPDU 2214-2, for example, if/when the first indication indicates that STA 2202/2204 is not to distribute the uplink bandwidth. STA 2202/2204 may modulate the STF(s) onto one or more non-DRUs of the uplink bandwidth. STA 2202/2204 may send (e.g., transmit) the STF(s) as distributed bandwidth portions of first PPDU 2214-1/second PPDU 2214-2, for example, if/when the first indication indicates that STA 2202/2204 is to distribute the uplink bandwidth. A distributed bandwidth portion may be modulated on a tone distribution of the uplink bandwidth.

The first indication may indicate that STA 2202/2204 may distribute the uplink bandwidth for the transmission of the STF(s) comprised in first PPDU 2214-1/second PPDU 2214-2. Each of spatial streams 2208-1 to 2208-4 may comprise a DRU portion and a distributed bandwidth portion. The DRU portion (or the DRU modulated portion) may comprise the LTF and Data fields of the PPDU which may comprise the spatial stream. The distributed bandwidth portion may comprise the STF of the PPDU which may comprise the spatial stream. The PPDU may comprise the spatial stream which may be a UHR PPDU as shown by UHR TB PPDU 1604. The DRU portion of the spatial stream may comprise the UHR-L TF and Data fields of the UHR PPDU. The distributed bandwidth portion of the spatial stream may comprise the UHR-STF of the UHR PPDU.

The DRU portion of the spatial stream may be modulated on the DRU allocated to the STA sending (e.g., transmitting) the spatial stream. The respective DRU portions of spatial streams 2208-1 and 2208-2 may be modulated on DRU1 allocated to STA 2202. The respective DRU portions of spatial streams 2208-3 and 2208-4 may be modulated on DRU2 allocated to STA 2204. Local CSD may be used for the DRU portions modulated/sent (e.g., transmitted) on the same DRU, for example, to mitigate unintentional beamforming. As shown in FIG. 22, local CSD may be used for the LTF and Data fields of spatial streams 2208-1 and 2208-2. Local CSD may use a cyclic shift value of 0 for the LTF and Data fields of spatial stream 2208-1 and a cyclic shift value of -400 to the LTF and Data fields for spatial stream 2208-2. Local CSD (e.g., using the same cyclic shift values of 0 and -400) may be used for the LTF and Data fields of spatial streams 2208-3 and 2208-4.

The distributed bandwidth portion of the spatial stream may be modulated on a tone distribution of the uplink bandwidth indicated in frame 2210. The STA sending (e.g., transmitting) the spatial stream may determine the tone distribution for the distributed bandwidth portion of the spatial stream, for example, based on a number of spatial streams (N) being sent (e.g., transmitted) by the STA. The tone distribution may correspond to every tone of the uplink bandwidth, for example, if/when the STA may send (transmit) a single spatial stream (N=1). The tone distribution may correspond to every other tone of the uplink bandwidth, for example, if/when the STA may send (e.g., transmit) two spatial streams (N=2).

STA 2202 may determine a first tone distribution, for example, based on STA 2202 sending (e.g., transmitting) two spatial streams 2208-1 and 2208-2. STA 2202 may determine a first tone distribution for the distributed bandwidth portion of spatial stream 2208-1 as corresponding to every other tone of the uplink bandwidth. The first tone distribution for the distributed bandwidth portion of spatial stream 2208-1 may, for example, start from a lowest frequency tone among the tones of the uplink bandwidth. The first tone distribution for the distributed bandwidth portion of spatial stream 2208-1 may, for example, start from a second lowest frequency tone among the tones of the uplink bandwidth. STA 2202 may determine a second tone distribution for the distributed bandwidth portion of spatial stream 2208-2. The second tone distribution may be the complement of the first tone distribution. The second tone distribution may comprise the tones of the uplink bandwidth not comprised in the first tone distribution. The first tone distribution may comprise the odd tones of the tones of the uplink bandwidth. The second tone distribution may comprise the even tones of the tones of the uplink bandwidth. The first tone distribution and the second tone distribution may overlap in one or more tones. Some of the tones of the uplink bandwidth may be common to the first tone distribution and the second tone distribution.

Each of STAs 2202 and 2204 may determine respective tone distributions for the distributed bandwidth portions of its respective spatial streams, as described herein for STA 2202. STAs sending (e.g., transmitting) the same number of spatial streams may determine identical tone distributions for their respective spatial streams. As shown in FIG. 22, each of STAs 2202 and 2204 may determine a first tone distribution (e.g., corresponding to the odd tones of the uplink bandwidth) that the STA may use for the first of its two spatial streams and a second tone distribution (e.g., corresponding to even tones of the uplink bandwidth) that the STA may use for the second of its two spatial streams, for example, based on STAs 2202 and 2204 each sending (e.g., transmitting) two spatial streams. STA 2202 may use the first tone distribution for the distributed bandwidth portion of spatial stream 2208-1 and the second tone distribution for the distributed bandwidth portion of spatial stream 2208-2. STA 2204 may use the first tone distribution for the distributed bandwidth portion of spatial stream 2208-3 and the second tone distribution for the distributed bandwidth portion of spatial stream 2208-4. STAs sending (e.g., transmitting) different number of spatial streams may determine different tone distributions for their respective spatial streams. The different tone distributions may or may not overlap with each other.

STA 2202 (or 2204) may determine a first transmit power for the distributed bandwidth portion (e.g., STF) of spatial stream 2208-1, for example, based on the first tone distribution and a second transmit power for the distributed bandwidth portion (e.g., STF) of spatial stream 2208-2, for example, based on the second tone distribution. The first transmit power may be equal to the second transmit power, for example, if/when the first tone distribution and the second tone distribution may be complements (e.g., odd/even). The first/second transmit power may be directly proportional to the tone spacing of the first/second tone distribution (i.e., the larger the tone spacing the greater the transmit power). A total transmit power (i.e., across all spatial streams sent (e.g., transmitted) by a STA) for the distributed bandwidth portion (e.g., STF) may, for example, be based on the first tone spacing of the first tone distribution and/or the second tone spacing of the second tone distribution. The total transmit power for the distributed bandwidth portion (e.g., STF) may, for example, be up to 3 dB greater than a maximum total transmit power allowable for a non-DRU transmission of the STF.

Frame 2210 may comprise a second indication of whether STA 2202 (or 2204) is to determine the first transmit power, for example, based on the first tone distribution and/or the second transmit power, for example, based on the second tone distribution. Frame 2210 may comprise a second indication of whether STA 2202 (or 2204) is to determine the total transmit power for the distributed bandwidth portion (e.g., STF), for example, based on the first tone spacing of the first tone distribution and/or the second tone spacing of the second tone distribution. The second indication may be comprised in the first indication.

Each of STAs 2202 and 2204 may be assigned a unique cyclic shift value, for example, to reduce unintentional beamforming between distributed bandwidth portions modulated onto the same tone distribution (or onto partially overlapping tone distributions) of the uplink bandwidth. Each of STAs 2202 and 2204 may be assigned a unique cyclic shift value to use for the distributed bandwidth portions of its spatial streams. As shown in FIG. 22, STA 2202 may be assigned a first cyclic shift value of 0 that STA 2202 may use for the distributed bandwidth portions of spatial streams 2208-1 and 2208-2. STA 2204 may be assigned a second cyclic shift value of -200 that STA 2204 may use for the distributed bandwidth portions of spatial streams 2208-3 and 2208-4. Frame 2210 may indicate the first cyclic shift value and/or the second cyclic shift value. Frame 2210 may indicate a single cyclic shift value from which STAs 2202 and 2204 may determine the first cyclic shift value and the second cyclic shift value. STA 2202/2204 may determine the first/second cyclic shift value, for example, based on the order of the DRU allocation of STA 2202/2204 in frame 2210. Frame 2210 may be a trigger frame that comprises a first user info field indicating the allocation of DRU1 to STA 2202 and a second user info field (following the first user info field) indicating the allocation of DRU2 to STA 2204. STA 2202 may use a first cyclic shift value (e.g., 0) indicated in a first entry in a list of cyclic shift values. STA 2204 may use a second cyclic shift value (e.g., -400) indicated in a second entry in the list of cyclic shift values.

AP 2206 may receive first PPDU 2214-1 and second PPDU 2214-2 simultaneously. AP 2206 may receive a plurality of spatial streams simultaneously. A total number of the plurality of spatial streams may be based on or equal to a total number of user info fields of the trigger frame, for example, if/when frame 2210 may be a trigger frame. A maximum number of the total number of spatial streams may, for example, be equal to 8 or 16.

AP 2206 may receive first PPDU 2214-1, for example, based on the first indication in frame 2210. AP 2206 receiving first PPDU 2214-1 may comprise AP 2206 receiving spatial stream 2208-1 of first PPDU 2214-1. Spatial stream 2208-1 of first PPDU 2214-1 may carry, via a first set of tones of the uplink bandwidth, a first version of the STF. Spatial stream 2208-2 of first PPDU 2214-1 may carry, via a second set of tones of the uplink bandwidth, a second version of the STF. AP 2206 may receive second PPDU 2214-2, for example, based on the first indication in frame 2210. AP 2206 receiving second PPDU 2214-2 may comprise AP 2206 receiving spatial stream 2208-3 of first PPDU 2214-3. Spatial stream 2208-3 of first PPDU 2214-3 may carry, via a third set of tones of the uplink bandwidth, a third version of the STF. Spatial stream 2208-4 of first PPDU 2214-4 may carry, via a fourth set of tones of the uplink bandwidth, a fourth version of the STF. The first set of tones and the third set of tones may be the same tones. The second set of tones and the fourth set of tones may be the same tones.

AP 2206 may receive the first/second version of the STF with a first cyclic shift value used for the STF. AP 2206 may receive the third/fourth version of the STF with a second cyclic shift value used for the STF. The first and second cyclic shift values may, for example, be indicated in frame 2210 as described herein.

AP 2206 may set its receiver gain, for example, based on the first indication in frame 2210. AP 2206 may lower its receiver gain, for example, if/when the first indication indicates that STA 2202 (or 2204) is to distribute the uplink bandwidth for the transmission of the STF of a PPDU.

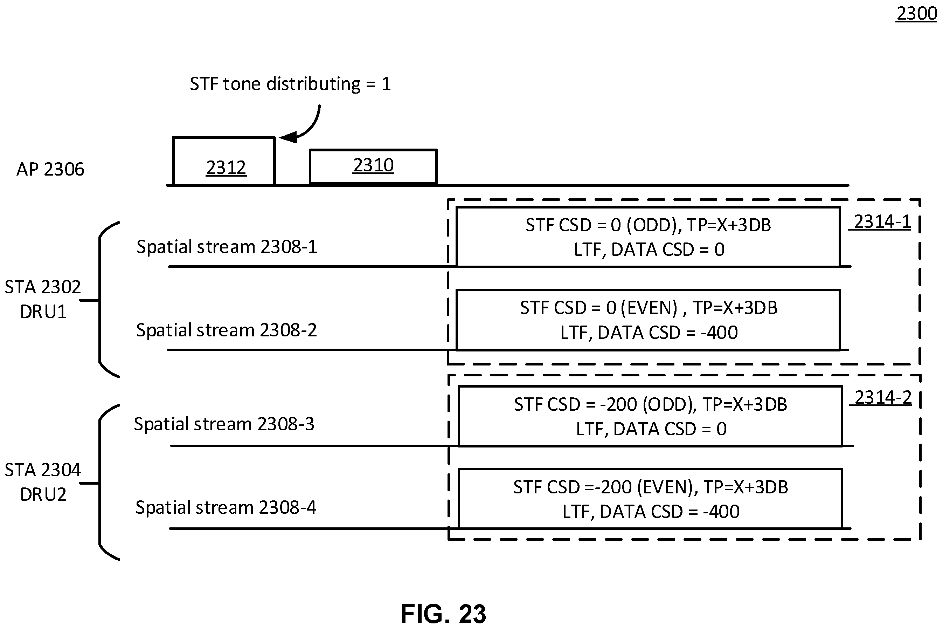

FIG. 23 shows another example of tone distribution. As shown in FIG. 23, example 2300 may include STAs 2302 and 2304 and an AP 2306. Each of STAs 2302 and 2304 may comprise a plurality (e.g., two, four, etc.) of antennas. STAs 2302 and 2304 may be associated with AP 2306. As would be understood by a person of skill in the art based on the teachings herein, example 2300 may be provided for exemplary purposes and may not be limiting of examples. The number of STAs may, for example, be lower than or greater than 2.

Example 2300 may begin with AP 2306 sending (e.g., transmitting) a frame 2312. Frame 2312 may, for example, be a broadcast frame, such as a beacon frame. Frame 2312 may, for example, be a unicast frame, such as an association response frame, a probe response frame, or an authentication response frame. Frame 2312 may be addressed to one of STAs 2302 and 2304, for example, as a unicast frame.

Frame 2312 may comprise the first indication as described herein with respect to FIG. 22. The first indication may be common to STAs 2302 and 2304, for example, where frame 2312 may be a broadcast frame. The first indication may be specific to STA 2302 or to STA 2304, for example, where frame 2312 maybe a unicast frame. Frame 2312 may comprise a first indication that may be common to both STAs 2302 and 2304. A person of skill in the art would appreciate that examples described hereinafter may be readily extended to examples in which frame 2312 may comprise a first indication specific to one of STAs 2302 and 2304.

Example 2300 may include AP 2306 sending (e.g., transmitting) a frame 2310. Frame 2310 may allocate uplink resources to STAs 2302 and 2304 for an uplink transmission by STAs 2302 and 2304. Frame 2310 may allocate a respective DRU to each of STAs 2302 and 2304 (e.g., DRU1 to STA 2302 and DRU2 to STA 2304). DRUs 1 and 2 may be located in a distribution/spreading bandwidth, as shown in FIG. 14. Frame 2310 may indicate an uplink bandwidth for the uplink transmission by STAs 2302 and 2304. The uplink bandwidth may, for example, be equal to 40 MHz, 80 MHz, 160 MHz, or 320 MHz. The uplink bandwidth may correspond to the spreading/distribution bandwidth within which DRUs 1-2 may be located.

Frame 2310 may comprise a trigger frame as shown in FIG. 9. Frame 2310 may comprise a first user info field for STA 2302 and a second user info field for STA 2302. The first user info field may comprise a first RU allocation field that may indicate DRU1. The second user info field may comprise a second RU allocation field that may indicate DRU2. Frame 2310 may comprise a common info field as shown in FIG. 10. The uplink bandwidth may be indicated in an UL BW subfield of the common info field.

STAs 2302 and 2304 may respond to frame 2310 from AP 2306 by sending (e.g., transmitting) respective PPDUs (e.g., a SIFS after receiving frame 2310). STA 2302 may send (e.g., transmit) a first PPDU 2314-1 comprising spatial streams 2308-1 and 2308-2. STA 2304 may send (e.g., transmit) a second PPDU 2314-2 comprising spatial streams 2308-3 and 2308-4. Spatial streams 2308-1, 2308-2, 2308-3, and 2308-4 may be similar to spatial streams 2208-1, 2208-2, 2208-3, and 2208-4 described herein with respect to FIG. 22. Examples described herein with reference to spatial streams 2208-1, 2208-2, 2208-3, and 2208-4 may be equally used for spatial streams 2308-1, 2308-2, 2308-3, and 2308-4. For the sake of brevity, the description of these examples may be omitted herein.

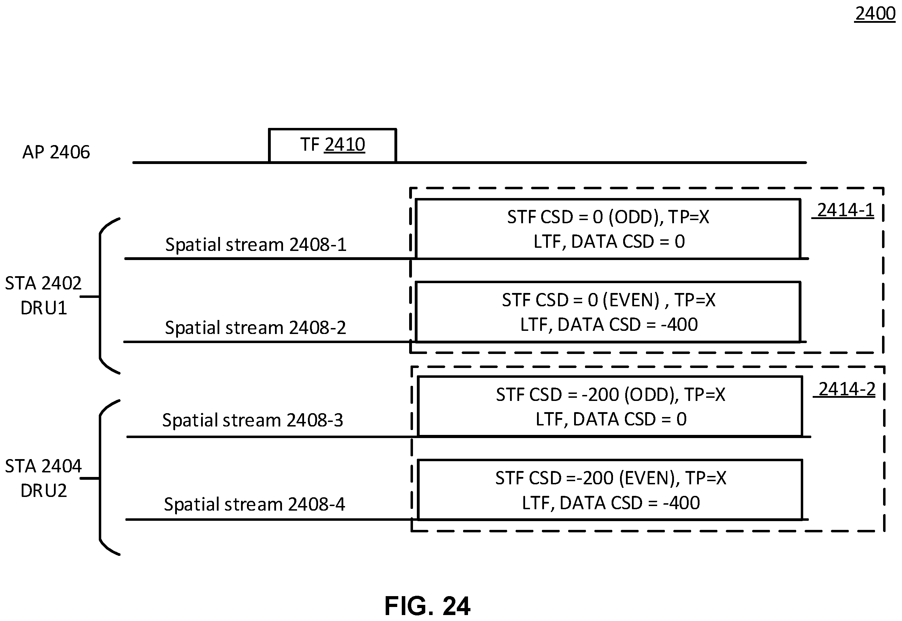

FIG. 24 shows another example of tone distribution. As shown in FIG. 24, example 2400 may include STAs 2402 and 2404 and an AP 2406. Each of STAs 2402 and 2404 may comprise a plurality (e.g., two, four, etc.) of antennas. STAs 2402 and 2404 may be associated with AP 2406. As would be understood by a person of skill in the art based on the teachings herein, example 2400 may be provided for exemplary purposes and may not be limiting of examples. The number of STAs may, for example, be lower than or greater than 2.

Example 2400 may begin with AP 2406 sending (e.g., transmitting) a frame 2410 to STAs 2402 and 2404. Frame 2410 may allocate uplink resources to STAs 2402 and 2404 for an uplink transmission by STAs 2402 and 2404. Frame 2410 may allocate a respective DRU to each of STAs 2402 and 2404 (e.g., DRU1 to STA 2402 and DRU2 to STA 2404). DRUs 1 and 2 may be located in a distribution/spreading bandwidth, as shown in FIG. 14. Frame 2410 may indicate an uplink bandwidth (e.g., PPDU bandwidth) for the uplink transmission by STAs 2202 and 2204. The uplink bandwidth may, for example, be equal to 40 MHz, 80 MHz, 160 MHz, or 320 MHz. Frame 2410 may not include a first indication that indicates whether STA 2202/2204 is to distribute the uplink bandwidth for transmission of an STF (or another field) of a PPDU to AP 2406. The uplink bandwidth may correspond to the spreading/distribution bandwidth within which DRUs 1-2 may be located.

Frame 2410 may comprise a trigger frame as shown in FIG. 9. Frame 2410 may comprise a first user info field for STA 2402 and a second user info field for STA 2404. The first user info field may comprise a first RU allocation field that may indicate DRU1. The second user info field may comprise a second RU allocation field that may indicate DRU2. Frame 2210 may comprise a common info field as shown in FIG. 10. The uplink bandwidth may be indicated in an UL BW subfield of the common info field.

STAs 2402 and 2404 may respond to frame 2410 from AP 2406 by sending (e.g., transmitting) respective PPDUs (e.g., a SIFS after receiving frame 2410). STA 2402 may send (e.g., transmit) a first PPDU 2414-1 comprising spatial streams 2408-1 and 2408-2. STA 2404 may send (e.g., transmit) a second PPDU 2414-2 comprising spatial streams 2408-3 and 2408-4.

STA 2402/2404 may determine whether to distribute the uplink bandwidth for the transmission of STF(s) comprised in first PPDU 2214-1/second PPDU 2214-2, for example, without receiving a first indication as described herein from AP 2406. STA 2402/2404 may send (e.g., transmit) the STF(s) as non-DRU portions of the first/second PPDU, for example, if/when STA 2402/2404 determines not to distribute the uplink bandwidth for the transmission of the STF(s) comprised in first PPDU 2214-1/second PPDU 2214-2. STA 2402/2404 may modulate the STF(s) onto one or more non-DRUs of the uplink bandwidth. STA 2402/2404 may send (e.g., transmit) the STF(s) as distributed bandwidth portions of first PPDU 2214-1/second PPDU 2214-2, for example, if/when STA 2402/2404 determines to distribute the uplink bandwidth for the transmission of the STF(s) comprised in first PPDU 2214-1/second PPDU 2214. A distributed bandwidth portion may be modulated on a tone distribution of the uplink bandwidth.

In example 2400, STA 2202/2204 may determine to distribute the uplink bandwidth for the transmission of the STF(s) comprised in first PPDU 2214-1/second PPDU 2214-2. Each of spatial streams 2408-1 to 2408-4 may comprise a DRU portion and a distributed bandwidth portion. The DRU portion (or the DRU modulated portion) may comprise the LTF and Data fields of the PPDU comprising the spatial stream. The distributed bandwidth portion may comprise the STF of the PPDU comprising the spatial stream. The PPDU comprising the spatial stream may be a UHR PPDU as shown by UHR TB PPDU 1604. The DRU portion of the spatial stream may comprise the UHR-LTF and Data fields of the UHR PPDU. The distributed bandwidth portion of the spatial stream may comprise the UHR-STF of the UHR PPDU.

The DRU portion of the spatial stream may be modulated on the DRU allocated to the STA sending (e.g., transmitting) the spatial stream. The respective DRU portions of spatial streams 2408-1 and 2408-2 may be modulated on DRU1 allocated to STA 2402. The respective DRU portions of spatial streams 2408-3 and 2408-4 may be modulated on DRU2 allocated to STA 2404. Local CSD may be used for the DRU portions modulated/sent (e.g., transmitted) on the same DRU, for example, to mitigate unintentional beamforming. As shown in FIG. 24, local CSD may be used for the LTF and Data fields of spatial streams 2408-1 and 2408-2. Local CSD may use a cyclic shift value of 0 for the LTF and Data fields of spatial stream 2408-1 and a cyclic shift value of -400 for the LTF and Data fields of spatial stream 2408-2. Local CSD (e.g., using the same cyclic shift values of 0 and -400) may be used for the LTF and Data fields of spatial streams 2408-3 and 2408-4.

The distributed bandwidth portion of the spatial stream may be modulated on a tone distribution of the uplink bandwidth indicated in frame 2410. The STA sending (e.g., transmitting) the spatial stream may determine the tone distribution for the distributed bandwidth portion of the spatial stream, for example, based on a number of spatial streams (N) being sent (e.g., transmitted) by the STA. The tone distribution may correspond to every tone of the uplink bandwidth, for example, if the STA may be sending (e.g., transmitting) a single spatial stream (N=1). The tone distribution may correspond to every other tone of the uplink bandwidth, for example, if the STA may be sending (e.g., transmitting) two spatial streams (N=2).

STA 2402 (or 2404) may determine a first transmit power for the distributed bandwidth portion (e.g., STF) of spatial streams 2408-1 and 2408-2 (2408-3 and 2408-4) based on a non-DRU transmission of the distribution bandwidth portion. STA 2402 (or 2404) may not exceed a maximum total transmit power allowable for a non-DRU transmission of the STF. AP 2406 may have no information regarding whether STA 2402 (or 2404) may distribute the uplink bandwidth for the transmission of the STF(s) comprised in spatial streams 2408-1 and 2408-2 (2408-3 and 2408-4) and may not adjust its receiver gain accordingly in advance of receiving spatial streams 2408-1 and 2408-2 (2408-3 and 2408-4).

Each of STAs 2402 and 2404 may be assigned a unique cyclic shift value, for example, to reduce unintentional beamforming between distributed bandwidth portions modulated onto the same tone distribution (or onto partially overlapping tone distributions) of the uplink bandwidth. Each of STAs 2402 and 2404 may be assigned a unique cyclic shift value, for example, to use for the distributed bandwidth portions of its spatial streams. As shown in FIG. 24, STA 2402 may be assigned a first cyclic shift value of 0 that STA 2402 may use for the distributed bandwidth portions of spatial streams 2408-1 and 2408-2. STA 2404 may be assigned a second cyclic shift value of -200 that STA 2404 may use for the distributed bandwidth portions of spatial streams 2408-3 and 2408-4. Frame 2410 may indicate the first cyclic shift value and/or the second cyclic shift value. Frame 2210 may indicate a single cyclic shift value from which STAs 2402 and 244 may determine the first cyclic shift value and the second cyclic shift value. STA 2402/2404 may determine the first/second cyclic shift value, for example, based on the order of the DRU allocation of STA 2402/2404 in frame 2410. Frame 2410 may be a trigger frame that comprises a first user info field indicating the allocation of DRU1 to STA 2402 and a second user info field (following the first user info field) indicating the allocation of DRU2 to STA 2404. STA 2402 may use a first cyclic shift value (e.g., 0) indicated by a first entry in a list of cyclic shift values. STA 2404 may use a second cyclic shift value (e.g., -400) indicated in a second entry in the list of cyclic shift values.

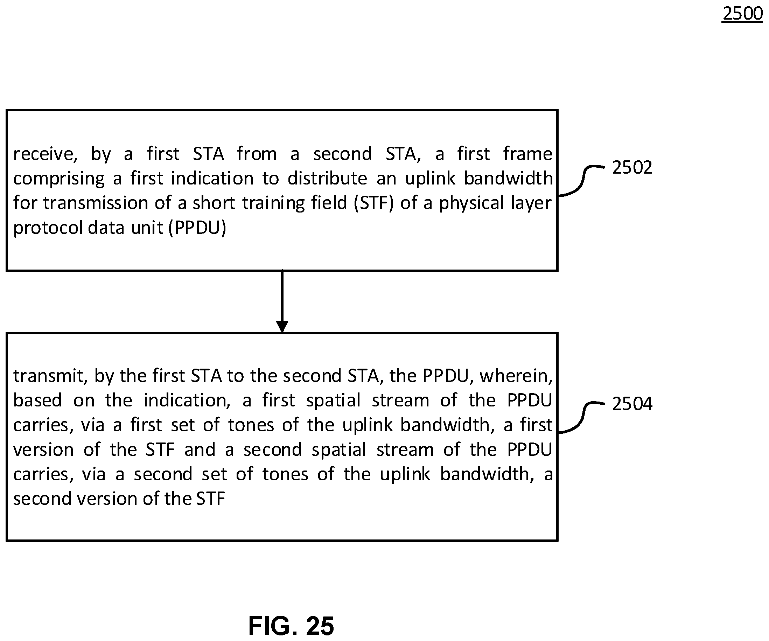

FIG. 25 shows an example of sending spatial streams. Process 2500 may be performed by a first STA, for example, STA 2202, 2204, 2302, or 2304. As shown in FIG. 25, process 2500 may include steps 2502 and 2504.

Step 2502 may include receiving, by the first STA from a second STA, a first frame comprising a first indication to distribute an uplink bandwidth for transmission of an STF of a PPDU. The second STA may comprise an AP STA, for example, AP 2206 or 2306.

The first frame may comprise one or more of: a beacon frame; an association response frame; a probe response frame; an authentication response frame, or a trigger frame.

The first frame may comprise a trigger frame. The first indication may be provided in a first user info field of the trigger frame or in a common info field of the trigger frame.

The first frame may comprise/indicate a first resource unit (RU) allocated to the first STA. The first RU may comprise a distributed RU (DRU). The first RU may be located in a spreading/distribution bandwidth.

The first frame may indicate the uplink bandwidth. The uplink bandwidth may be the spreading/distribution bandwidth.

Step 2502 may include sending (e.g., transmitting), by the first STA to the second STA, the PPDU. A first spatial stream of the PPDU may carry, via a first set of tones of the uplink bandwidth, a first version of the STF, for example, based on the first indication. A second spatial stream of the PPDU may carry, via a second set of tones of the uplink bandwidth, a second version of the STF, for example, based on the first indication.

The first set of tones may be based on a first tone distribution and the second set of tones may be based on a second tone distribution. The first set of tones may comprise one of every N tones of the uplink bandwidth, for example, starting from a lowest frequency tone of the uplink bandwidth; and the second set of tones may comprise one of every N tones of the uplink bandwidth, for example, starting from a second lowest frequency tone of the uplink bandwidth. N may, for example, comprise 2, 3, or 4.

Distributing the uplink bandwidth for transmission of the STF may comprise splitting tones of the uplink bandwidth into: the first set of tones of the uplink bandwidth; and the second set of tones of the uplink bandwidth.

The first frame may indicate a cyclic shift value, associated with the STF, for the first STA. Sending (e.g., transmitting) the PPDU, in step 2504, may comprise sending (e.g., transmitting) the first version of the STF using the cyclic shift value and sending (e.g., transmitting) the second version of the STF using the cyclic shift value.

A first transmit power of the STF may be based on a first tone spacing of the first set of tones of the uplink bandwidth and a second tone spacing of the second set of tones of the uplink bandwidth. The first frame may further comprise a second indication that the first STA is to use the first transmit power of the STF (e.g., to send/transmit the STF). The first indication may comprise the second indication.

A first transmit power of the STF may be based on a first tone spacing of the tones of the uplink bandwidth.

Process 2500 may further comprise sending (e.g., transmitting), by the first STA to the second STA, a second frame indicating a capability of the first STA to distribute an uplink bandwidth for transmission of an STF of a PPDU. The receiving of the first frame in step 2502 may be based on the capability.

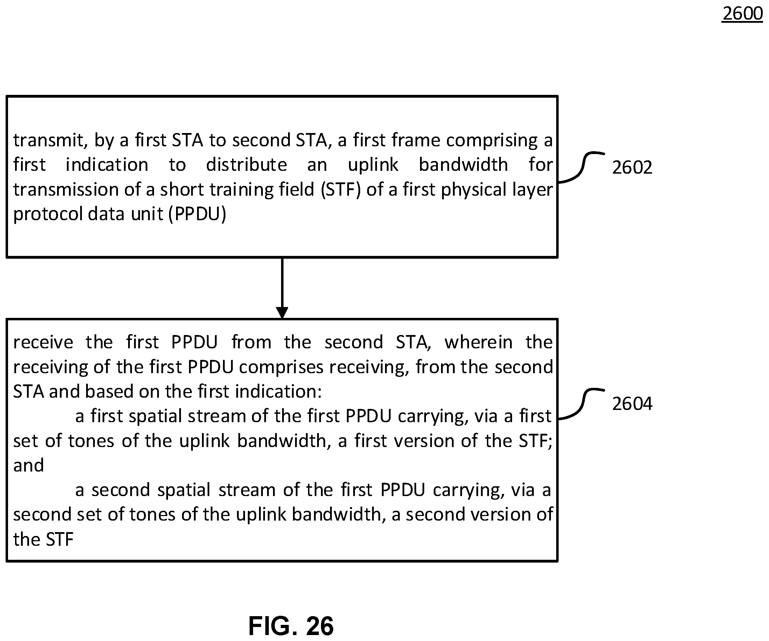

FIG. 26 shows an example of receiving spatial streams. Process 2600 may be performed by a first STA, for example AP 2206 or 2306and/or STA 2202, 2204, 2302, or 2304. As shown in FIG. 26, process 2600 may include steps 2602 and 2604.

Step 2602 may include sending (e.g., transmitting), by the first STA to a second STA, a first frame comprising a first indication to distribute an uplink bandwidth for transmission of an STF of a PPDU. The second STA may comprise a non-AP STA, for example, STA 2202, 2204, 2302, or 2304.

The first frame may comprise one or more of: a beacon frame; an association response frame; a probe response frame; an authentication response frame, or a trigger frame.

The first frame may comprise a trigger frame. The first indication may be provided in a first user info field of the trigger frame or in a common info field of the trigger frame.

The first frame may comprise/indicate a first RU allocated to the second STA. The first RU may comprise a DRU. The first RU may be located in a spreading/distribution bandwidth. The first frame may further comprise/indicate a second RU allocated to a third STA. The second RU may comprise a DRU. The trigger frame may comprise a plurality of user info fields, for example, if the first frame comprises a trigger frame. The plurality of user info fields may comprise a first user info field indicating the first RU and a second user info field indicating the second RU.

The first frame may indicate the uplink bandwidth. The uplink bandwidth may be the spreading/distribution bandwidth.

Step 2502 may include receiving the first PPDU from the second STA. Receiving the first PPDU may comprise receiving, from the second STA and based on the first indication, a first spatial stream of the first PPDU carrying, via a first set of tones of the uplink bandwidth, a first version of the STF and a second spatial stream of the first PPDU carrying, via a second set of tones of the uplink bandwidth, a second version of the STF.

The first set of tones may be based on a first tone distribution and the second set of tones may be based on a second tone distribution. The first set of tones may comprise one of every N tones of the uplink bandwidth, for example, starting from a lowest frequency tone of the uplink bandwidth; The second set of tones may comprise one of every N tones of the uplink bandwidth, for example, starting from a second lowest frequency tone of the uplink bandwidth. N may, for example, comprise 2, 3, or 4.

Distributing/dividing the uplink bandwidth for transmission of the STF may comprise splitting tones of the uplink bandwidth into: the first set of tones of the uplink bandwidth; and the second set of tones of the uplink bandwidth.

The first frame may indicate a cyclic shift value, associated with the STF, for the first STA. Receiving the first PPDU, in step 2604, may comprise receiving the first/second version of the STF with the cyclic shift value used for the STF.

Process 2600 may further comprise receiving a second PPDU from a third STA. The receiving of the second PPDU may be simultaneous with the receiving of the first PPDU in step 2604. Receiving the second PPDU may comprise receiving, from the third STA and based on the first indication, a third spatial stream of the second PPDU carrying, via the first set of tones of the uplink bandwidth, a third version of the STF; and a fourth spatial stream of the second PPDU carrying, via the second set of tones of the uplink bandwidth, a fourth version of the STF.

The first frame may further indicate a second cyclic shift value, associated with the STF, for the third STA. The second cyclic shift value may be different than the first cyclic shift value.

The receiving of the third/fourth spatial stream may comprise receiving the third/fourth version of the STF with the second cyclic shift value used for the STF.

Process 2600 may further comprise receiving, by the first STA from the second STA, a second frame indicating a capability of the second STA to distribute an uplink bandwidth for transmission of an STF of a PPDU. The sending (e.g., transmitting) of the first frame in step 2602 may be based on the capability.

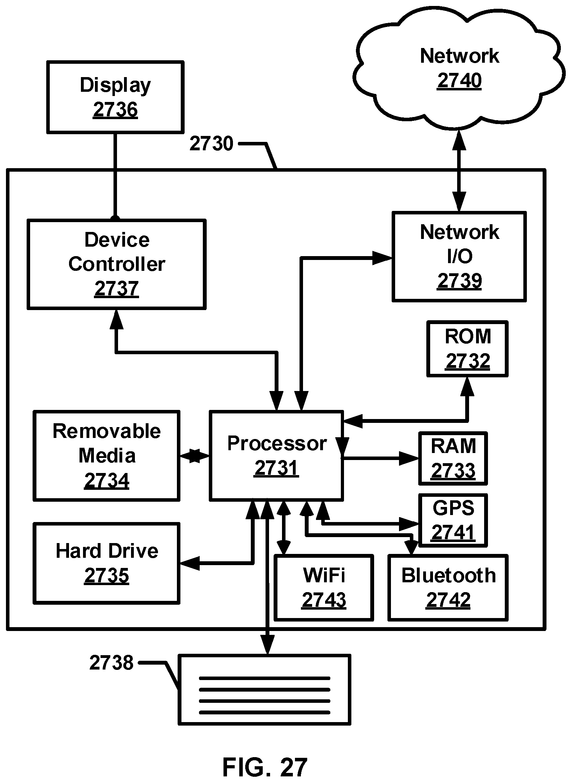

FIG. 27 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 1204, 1504, 1506, 1702, 1704, 1706, 1902, 1904, 1906, 2001, 2001-2005, 2101-2105, 2202, 2204, 2302, 2304, 2402, 2404), an AP (e.g., 104-1, 104-2, 1202, 1502, 1910, 2010, 2110, 2206, 2306, 2406), communication devices (e.g., 210, 260), and/or any computing and/or communication device described herein. The computing device 2730 may comprise one or more processors 2731, which may execute instructions stored in the random-access memory (RAM) 2733, the removable media 2734 (such as a Universal Serial Bus (USB) drive, compact disk (CD) or digital versatile disk (DVD), or floppy disk drive), or any other desired storage medium. Instructions may also be stored in an attached (or internal) hard drive 235. The computing device 2730 may also comprise a security processor (not shown), which may execute instructions of one or more computer programs to monitor the processes executing on the processor 2731 and any process that requests access to any hardware and/or software components of the computing device 2730 (e.g., ROM 2732, RAM 2733, the removable media 2734, the hard drive 2735, the device controller 2737, a network interface 2739, a GPS 2741, a Bluetooth interface 2742, a WiFi interface 2743, etc.). The computing device 2730 may comprise one or more output devices, such as the display 2736 (e.g., a screen, a display device, a monitor, a television, etc.), and may comprise one or more output device controllers 2737, such as a video processor. There may also be one or more user input devices 2738, such as a remote control, keyboard, mouse, touch screen, microphone, etc. The computing device 2730 may also comprise one or more network interfaces, such as a network interface 2739, which may be a wired interface, a wireless interface, or a combination of the two. The network interface 2739 may provide an interface for the computing device 2730 to communicate with a network 2740 (e.g., a RAN, or any other network). The network interface 2739 may comprise a modem (e.g., a cable modem), and the external network 2740 may comprise communication links, an external network, an in-home network, a provider's wireless, coaxial, fiber, or hybrid fiber/coaxial distribution system (e.g., a DOCSIS network), or any other desired network. Additionally, the computing device 2730 may comprise a location-detecting device, such as a global positioning system (GPS) microprocessor 2741, which may be configured to receive and process global positioning signals and determine, with possible assistance from an external server and antenna, a geographic position of the computing device 2730.

The example in FIG. 27 may be a hardware configuration, although the components shown may be implemented as software as well. Modifications may be made to add, remove, combine, divide, etc. components of the computing device 2730 as desired. Additionally, the components may be implemented using basic computing devices and components, and the same components (e.g., processor 2731, ROM storage 2732, display 2736, etc.) may be used to implement any of the other computing devices and components described herein. For example, the various components described herein may be implemented using computing devices having components such as a processor executing computer-executable instructions stored on a computer-readable medium, as shown in FIG. 27. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a station from an access point, a trigger frame comprising: a first indication of an uplink bandwidth; and a second indication to divide, for transmission of a short training field (STF) of a physical layer protocol data unit (PPDU), the uplink bandwidth.

Clause 2. The method of clause 1, further comprising: based on the second indication, transmitting, by the station to the access point: a first spatial stream comprising: a first version of the STF via a first set of tones of the uplink bandwidth, wherein the first version of the STF uses a first cyclic shift diversity value; and a second spatial stream comprising: a second version of the STF via a second set of tones of the uplink bandwidth, wherein the second version of the STF uses the first cyclic shift diversity value.

Clause 3. The method of clause 1 or clause 2, wherein a first transmit power of the STF is based on a first tone spacing of the first set of tones of the uplink bandwidth and a second tone spacing of the second set of tones of the uplink bandwidth.

Clause 4. The method of any one of clauses 1 to 3, wherein the second indication is provided in a first user info field of the trigger frame.

Clause 5. The method of any one of clauses 1 to 4, wherein the second indication is provided in a common info field of the trigger frame.

Clause 6. The method of any one of clauses 1 to 5, wherein the first set of tones comprise odd tones and the second set of tones comprise even tones, or the first set of tones comprise even tones and the second set of tones comprise odd tones.

Clause 7. The method of any one of clauses 1 to 6, further comprising transmitting, by the station to the access point, a second frame indicating a capability of the station to divide the uplink bandwidth for transmission of the STF of the PPDU.

Clause 8. The method of any one of clauses 1 to 7, wherein the first set of tones comprises one of every N tones of the uplink bandwidth, starting from a lowest frequency tone of the uplink bandwidth .

Clause 9. The method of any one of clauses 1 to 8, wherein the second set of tones comprises one of every N tones of the uplink bandwidth, starting from a second lowest frequency tone of the uplink bandwidth.

Clause 10. The method of any one of clauses 1 to 9, wherein the trigger frame comprises a first resource unit (RU) allocated to the station.

Clause 11.The method of any one of clauses 1 to 10, wherein the trigger frame further comprises a second RU allocated to the access point.

Clause 12. The method of any one of clauses 1 to 11, further comprising transmitting, by the station to the access point and based on the second indication, a second PPDU comprising: a third spatial stream of the second PPDU comprising: a third version of the STF via the first set of tones of the uplink bandwidth; and a fourth spatial stream of the second PPDU comprising: a fourth version of the STF via the second set of tones of the uplink bandwidth.

Clause 13. The method of any one of clauses 1 to 12, wherein the trigger frame further comprises a third indication that the station is to use the first transmit power of the STF.

Clause 14. A computing device comprising: one or more processors; and memory storing instructions that, when executed by the one or more processors, cause the computing device to perform the method of any one of clauses 1 to 13.

Clause 15. A system comprising: a station configured to perform the method of any one of clauses 1 to 13; and an access point configured to transmit the trigger frame.

Clause 16. A computer-readable medium storing instructions that, when executed, cause performance of the method of any one of clauses 1 to 13.

Clause 17. A method comprising: transmitting, by an access point to a station, a trigger frame comprising: a first indication of an uplink bandwidth; and a second indication to divide, for transmission of a short training field (STF) of a physical layer protocol data unit (PPDU), the uplink bandwidth.

Clause 18. The method of clause 17, further comprising: based on the second indication, receiving, by the access point from the station: a first spatial stream comprising: a first version of the STF via a first set of tones of the uplink bandwidth, wherein the first version of the STF uses a first cyclic shift diversity value; and a second spatial stream comprising: a second version of the STF via a second set of tones of the uplink bandwidth, wherein the second version of the STF uses the first cyclic shift diversity value.

Clause 19. The method of clause 17 or 18, wherein the trigger frame further comprises a first resource unit (RU) allocated to the station.

Clause 20. The method of any one of clauses 17 to 19, wherein the trigger frame further comprises a second RU allocated to a second station.

Clause 21. The method of any one of clauses 17 to 20, wherein the trigger frame comprises a plurality of user info fields, and wherein the plurality of user info fields comprise a first user info field indicating a first RU and a second user info field indicating a second RU.

Clause 22. The method of any one of clauses 17 to 21, further comprising: receiving, from a second station and based on the first indication, a second PPDU comprising: a third spatial stream of the second PPDU comprising: a third version of the STF via the first set of tones of the uplink bandwidth; and a fourth spatial stream of the second PPDU comprising: a fourth version of the STF via the second set of tones of the uplink bandwidth.

Clause 23. The method of any one of clauses 17 to 22, wherein the transmitting of the trigger frame is based on a capability of the station to divide the uplink bandwidth for transmission of the STF of the PPDU.

Clause 24. The method of any one of clauses 17 to 23, wherein the first set of tones comprises one of every N tones of the uplink bandwidth, starting from a lowest frequency tone of the uplink bandwidth.

Clause 25. The method of any one of clauses 17 to 24, wherein the second set of tones comprises one of every N tones of the uplink bandwidth, starting from a second lowest frequency tone of the uplink bandwidth.

Clause 26. A computing device comprising: one or more processors; and memory storing instructions that, when executed by the one or more processors, cause the computing device to perform the method of any one of clauses 17 to 25.

Clause 27. A system comprising: an access point configured to perform the method of any one of clauses 17 to 25; and a station configured to receive the trigger frame.

Clause 28. A computer-readable medium storing instructions that, when executed, cause performance of the method of any one of clauses 17 to 25.

Clause 29. A method comprising: receiving, by a station from an access point, a trigger frame comprising: a first indication of an uplink bandwidth; and a second indication to divide, for transmission of a short training field (STF) of a physical layer protocol data unit (PPDU), the uplink bandwidth.

Clause 30. The method of clause 29, further comprising: based on the second indication, transmitting, by the station to the access point: a first spatial stream comprising: a first version of the STF via a first set of tones of the uplink bandwidth, wherein the first version of the STF uses a first cyclic shift diversity value; and a second spatial stream comprising: a second version of the STF via a second set of tones of the uplink bandwidth, wherein the second version of the STF uses the first cyclic shift diversity value.

Clause 31. The method of clause 29 or 30, wherein a first transmit power of the STF is based on a first tone spacing of the first set of tones of the uplink bandwidth and a second tone spacing of the second set of tones of the uplink bandwidth.

Clause 32. The method of any one of clauses 29 to 31, wherein the trigger frame further comprises a third indication that the station is to use the first transmit power of the STF.

Clause 33. The method of any one of clauses 29 to 32, wherein the first indication is provided in a common info field of the trigger frame.

Clause 34. The method of any one of clauses 29 to 33, wherein the trigger frame comprises a first resource unit (RU) allocated to the station.

Clause 35. A computing device comprising: one or more processors; and memory storing instructions that, when executed by the one or more processors, cause the computing device to perform the method of any one of clauses 29 to 34.

Clause 36. A system comprising: a station configured to perform the method of any one of clauses 29 to 34; and an access point configured to transmit the trigger frame.

Clause 37. A computer-readable medium storing instructions that, when executed, cause performance of the method of any one of clauses 29 to 34.

Clause 38. A method comprising: receiving, by a station (STA) from an access point (AP), a trigger frame comprising: a first indication of an uplink bandwidth; and a second indication to distribute/split/divide the uplink bandwidth for transmission of a short training field (STF) of a physical layer protocol data unit (PPDU).

Clause 39. The method of clause 38, further comprising: based on the second indication, transmitting, by the STA to the AP: a first spatial stream carrying a first version of the STF via a first set of tones of the uplink bandwidth; and a second spatial stream carrying a second version of the STF via a second set of tones of the uplink bandwidth.

Clause 40. A method comprising: receiving, by a first station (STA) from a second STA, a first frame comprising a first indication to distribute an uplink bandwidth for transmission of a short training field (STF) of a physical layer protocol data unit (PPDU).

Clause 41. The method of clause 40, further comprising: transmitting, by the first STA to the second STA, the PPDU, wherein, based on the first indication, a first spatial stream of the PPDU carries, via a first set of tones of the uplink bandwidth, a first version of the STF and a second spatial stream of the PPDU carries, via a second set of tones of the uplink bandwidth, a second version of the STF.

Clause 42. The method of clause 40 or 41, wherein the second STA comprises an access point (AP) STA.

Clause 43. The method of any one of clauses 40 to 42, wherein the first STA comprises a non-AP STA.

Clause 44. The method of any one of clauses 40 to 43, wherein the first frame comprises: a beacon frame; an association response frame; a probe response frame; or an authentication response frame.

Clause 45. The method of any one of clauses 40 to 44, wherein the first frame comprises a trigger frame.

Clause 46. The method of any one of clauses 40 to 45, wherein the first indication is provided in a first user info field of the trigger frame.

Clause 47. The method of any one of clauses 40 to 46, wherein the first indication is provided in a common info field of the trigger frame.

Clause 48. The method of any one of clauses 40 to 47, wherein the trigger frame comprises/indicates a first resource unit (RU) allocated to the first STA.

Clause 49. The method of any one of clauses 40 to 48, wherein the first RU comprises a distributed RU.

Clause 50. The method of any one of clauses 40 to 49, wherein the trigger frame indicates a cyclic shift value, associated with the STF, for the first STA.

Clause 51. The method of any one of clauses 40 to 50, wherein transmitting the PPDU comprises transmitting the first version of the STF using the cyclic shift value.

Clause 52. The method of any one of clauses 40 to 51, wherein transmitting the PPDU comprises transmitting the second version of the STF using the cyclic shift value.

Clause 53. The method of any one of clauses 40 to 52, wherein distributing the uplink bandwidth for transmission of the STF comprises splitting tones of the uplink bandwidth into: the first set of tones of the uplink bandwidth; and the second set of tones of the uplink bandwidth.

Clause 54. The method of any one of clauses 40 to 53, wherein a first transmit power of the STF is based on a first tone spacing of the first set of tones of the uplink bandwidth and a second tone spacing of the second set of tones of the uplink bandwidth.

Clause 55. The method of any one of clauses 40 to 54, wherein the first frame further comprises a second indication that the first STA is to use the first transmit power of the STF.

Clause 56. The method of any one of clauses 40 to 55, wherein the first indication comprises the second indication.

Clause 57. The method of any one of clauses 40 to 56, wherein a first transmit power of the STF is based on a first tone spacing of the tones of the uplink bandwidth.

Clause 58. The method of any one of clauses 40 to 57, further comprising transmitting, by the first STA to the second STA, a second frame indicating a capability of the first STA to distribute an uplink bandwidth for transmission of an STF of a PPDU.

Clause 59. The method of any one of clauses 40 to 58, wherein the receiving of the first frame is based on the capability.

Clause 60. The method of any one of clauses 40 to 59, wherein the first set of tones comprises one of every N tones of the uplink bandwidth, starting from a lowest frequency tone of the uplink bandwidth.

Clause 61. The method of any one of clauses 40 to 60, wherein the second set of tones comprises one of every N tones of the uplink bandwidth, starting from a second lowest frequency tone of the uplink bandwidth.

Clause 62. The method of any one of clauses 40 to 61, wherein N comprises 2, 3, or 4.

Clause 63. A computing device comprising: one or more processors; and memory storing instructions that, when executed by the one or more processors, cause the computing device to perform the method of any one of clauses 40 to 62.

Clause 64. A system comprising: a first station configured to perform the method of any one of clauses 40 to 62; and a second station configured to transmit the first frame.

Clause 65. A computer-readable medium storing instructions that, when executed, cause performance of the method of any one of clauses 40 to 62.

Clause 66. A method comprising: transmitting, by an access point (AP) to a station (STA), a trigger frame comprising: a first indication of an uplink bandwidth; and a second indication to distribute/split/divide the uplink bandwidth for transmission of a short training field (STF) of a physical layer protocol data unit (PPDU).

Clause 67. The method of clause 66, further comprising: based on the second indication, receiving, by the AP from the STA: a first spatial stream carrying a first version of the STF via a first set of tones of the uplink bandwidth; and a second spatial stream carrying a second version of the STF via a second set of tones of the uplink bandwidth.

Clause 68. A method comprising: transmitting, by a first station (STA) to second STA, a first frame comprising a first indication to distribute an uplink bandwidth for transmission of a short training field (STF) of a first physical layer protocol data unit (PPDU).

Clause 69. The method of clause 68, further comprising: receiving the first PPDU from the second STA, wherein the receiving of the first PPDU comprises receiving, from the second STA and based on the first indication: a first spatial stream of the first PPDU carrying, via a first set of tones of the uplink bandwidth, a first version of the STF; and a second spatial stream of the first PPDU carrying, via a second set of tones of the uplink bandwidth, a second version of the STF.

Clause 70. The method of clause 68 or 69, wherein the first STA comprises an access point (AP) STA.

Clause 71. The method of any one of clauses 68 to 70, wherein the second STA comprises a non-AP STA.

Clause 72. The method of any one of clauses 68 to 71, wherein the first frame comprises: a beacon frame; an association response frame; a probe response frame; or an authentication response frame.

Clause 73. The method of any one of clauses 68 to 72, wherein the first frame comprises a trigger frame.

Clause 74. The method of any one of clauses 68 to 73, wherein the first indication is provided in a first user info field of the trigger frame.

Clause 75. The method of any one of clauses 68 to 74, wherein the first indication is provided in a common info field of the trigger frame.

Clause 76. The method of any one of clauses 68 to 75, wherein the trigger frame further comprises/indicates a first resource unit (RU) allocated to the second STA.

Clause 77. The method of any one of clauses 68 to 76, wherein the first RU comprises a distributed RU.

Clause 78. The method of any one of clauses 68 to 77, wherein the trigger frame further comprises/indicates a second RU allocated to a third STA.

Clause 79. The method of any one of clauses 68 to 78, wherein the second RU comprises a distributed RU.

Clause 80. The method of any one of clauses 68 to 79, wherein the trigger frame comprises a plurality of user info fields.

Clause 81. The method of any one of clauses 68 to 80, wherein the plurality of user info fields comprise a first user info field indicating the first RU and a second user info field indicating the second RU.

Clause 82. The method of any one of clauses 68 to 81, wherein the trigger frame further indicates a first cyclic shift value, associated with the STF, for the second STA.

Clause 83. The method of any one of clauses 68 to 82, wherein the receiving of the first/second spatial stream comprises receiving the first/second version of the STF with the first cyclic shift value applied to the STF.

Clause 84. The method of any one of clauses 68 to 83, wherein the trigger frame further indicates a second cyclic shift value, associated with the STF, for a third STA.

Clause 85. The method of any one of clauses 68 to 84, wherein the second cyclic shift value is different than the first cyclic shift value.

Clause 86. The method of any one of clauses 68 to 85, further comprising receiving, from the third STA and based on the first indication, a second PPDU comprising: a third spatial stream of the second PPDU carrying, via the first set of tones of the uplink bandwidth, a third version of the STF; and a fourth spatial stream of the second PPDU carrying, via the second set of tones of the uplink bandwidth, a fourth version of the STF.

Clause 87. The method of any one of clauses 68 to 86, wherein the receiving of the third/fourth spatial stream comprises receiving the third/fourth version of the STF with the second cyclic shift value applied to the STF.

Clause 88. The method of any one of clauses 68 to 87, wherein distributing the uplink bandwidth for transmission of the STF comprises splitting tones of the RU into: the first set of tones of the uplink bandwidth; and the second set of tones of the uplink bandwidth.

Clause 89. The method of any one of clauses 68 to 88, further comprising receiving, by the first STA from the second STA, a second frame indicating a capability of the second STA to distribute an uplink bandwidth for transmission of an STF of a PPDU.

Clause 90. The method of any one of clauses 68 to 89, wherein the transmitting of the first frame is based on the capability.

Clause 91. The method of any one of clauses 68 to 90, wherein the first set of tones comprises one of every N tones of the uplink bandwidth, starting from a lowest frequency tone of the uplink bandwidth.

Clause 92. The method of any one of clauses 68 to 91, wherein the second set of tones comprises one of every N tones of the uplink bandwidth, starting from a second lowest frequency tone of the uplink bandwidth.

Clause 93. The method of any one of clauses 68 to 92, wherein N comprises 2, 3, or 4.

Clause 94. A computing device comprising: one or more processors; and memory storing instructions that, when executed by the one or more processors, cause the computing device to perform the method of any one of clauses 68 to 93.

Clause 95. A system comprising: a first station configured to perform the method of any one of clauses 68 to 93; and a second station configured to receive the first frame.

Clause 96. A computer-readable medium storing instructions that, when executed, cause performance of the method of any one of clauses 68 to 93.

A station may perform a method comprising one or more operations. The station may receive, by a station from an access point, a trigger frame. The trigger frame may comprise: a first indication of an uplink bandwidth; and a second indication to divide, for transmission of a short training field (STF) of a physical layer protocol data unit (PPDU), the uplink bandwidth. Based on the second indication, the station may transmit, to the access point: a first spatial stream and a second spatial stream. The first spatial stream may comprise: a first version of the STF via a first set of tones of the uplink bandwidth, wherein the first version of the STF uses a first cyclic shift diversity value. The second spatial stream may comprise: a second version of the STF via a second set of tones of the uplink bandwidth, wherein the second version of the STF uses the first cyclic shift diversity value. The first transmit power of the STF may be based on a first tone spacing of the first set of tones of the uplink bandwidth and a second tone spacing of the second set of tones of the uplink bandwidth. The second indication may be provided in a first user info field of the trigger frame. The second indication may be provided in a common info field of the trigger frame. The first set of tones may comprise odd tones and the second set of tones may comprise even tones, or the first set of tones may comprise even tones and the second set of tones may comprise odd tones. The station may transmit, to the access point, a second frame indicating a capability of the station to divide the uplink bandwidth for transmission of the STF of the PPDU. The first set of tones may comprise one of every N tones of the uplink bandwidth, starting from a lowest frequency tone of the uplink bandwidth .The second set of tones may comprise one of every N tones of the uplink bandwidth, starting from a second lowest frequency tone of the uplink bandwidth. The trigger frame may comprise a first resource unit (RU) allocated to the station. The trigger frame may further comprise a second RU allocated to the access point. Based on the second indication, the station may transmit, to the access point, a second PPDU comprising: a third spatial stream of the second PPDU and a fourth spatial stream of the second PPDU. The third spatial stream may comprise: a third version of the STF via the first set of tones of the uplink bandwidth. The fourth spatial stream may comprise: a fourth version of the STF via the second set of tones of the uplink bandwidth. The trigger frame may further comprise a third indication that the station is to use the first transmit power of the STF. The station may comprise: one or more processors; and memory storing instructions that, when executed by the one or more processors, cause the station to perform the described method, additional operations, and/or include the additional elements. A system may comprise: a station configured to perform the described method, additional operations, and/or include the additional elements; and an access point configured to transmit the trigger frame. A computer-readable medium may store instructions that, when executed, cause performance of the described method, additional operations, and/or include the additional elements.

An access point may perform a method comprising one or more operations. The access point may transmit, to a station, a trigger frame. The trigger frame may comprise: a first indication of an uplink bandwidth; and a second indication to divide, for transmission of a short training field (STF) of a physical layer protocol data unit (PPDU), the uplink bandwidth. Based on the second indication, the access point may receive, from the station: a first spatial stream and a second spatial stream. The first spatial stream may comprise: a first version of the STF via a first set of tones of the uplink bandwidth, wherein the first version of the STF uses a first cyclic shift diversity value. The second spatial stream may comprise: a second version of the STF via a second set of tones of the uplink bandwidth, wherein the second version of the STF uses the first cyclic shift diversity value. The trigger frame may further comprise a first resource unit (RU) allocated to the station. The trigger frame may further comprise a second RU allocated to a second station. The trigger frame may comprise a plurality of user info fields. The plurality of user info fields may comprise a first user info field indicating a first RU and a second user info field indicating a second RU. Based on the first indication, a second station may receive a second PPDU. The second PPDU may comprise: a third spatial stream of the second PPDU and a fourth spatial stream of the second PPDU. The third spatial stream may comprise: a third version of the STF via the first set of tones of the uplink bandwidth. The fourth spatial stream may comprise: a fourth version of the STF via the second set of tones of the uplink bandwidth. The transmitting of the trigger frame may be based on a capability of the station to divide the uplink bandwidth for transmission of the STF of the PPDU. The first set of tones may comprise one of every N tones of the uplink bandwidth, starting from a lowest frequency tone of the uplink bandwidth. The second set of tones may comprise one of every N tones of the uplink bandwidth, starting from a second lowest frequency tone of the uplink bandwidth. The access point may comprise: one or more processors; and memory storing instructions that, when executed by the one or more processors, cause the access point to perform the described method, additional operations, and/or include the additional elements. A system may comprise: an access point configured to perform the described method, additional operations, and/or include the additional elements; and a station configured to receive the trigger frame. A computer-readable medium may store instructions that, when executed, cause performance of the described method, additional operations, and/or include the additional elements.

A station may perform a method comprising one or more operations. The station may receive, from an access point, a trigger frame. The trigger frame may comprise: a first indication of an uplink bandwidth; and a second indication to divide, for transmission of a short training field (STF) of a physical layer protocol data unit (PPDU), the uplink bandwidth. Based on the second indication, the station may transmit, to the access point: a first spatial stream and a second spatial stream. The first spatial stream may comprise: a first version of the STF via a first set of tones of the uplink bandwidth, wherein the first version of the STF uses a first cyclic shift diversity value. The second spatial stream may comprise: a second version of the STF via a second set of tones of the uplink bandwidth, wherein the second version of the STF uses the first cyclic shift diversity value. A first transmit power of the STF may be based on a first tone spacing of the first set of tones of the uplink bandwidth and a second tone spacing of the second set of tones of the uplink bandwidth. The trigger frame may further comprise a third indication that the station may use the first transmit power of the STF. The first indication may be provided in a common info field of the trigger frame. The trigger frame may further comprise a first resource unit (RU) allocated to the station. The station may comprise: one or more processors; and memory storing instructions that, when executed by the one or more processors, cause the station to perform the described method, additional operations, and/or include the additional elements. A system may comprise: a station configured to perform the described method, additional operations, and/or include the additional elements; and an access point configured to transmit the trigger frame. A computer-readable medium may store instructions that, when executed, cause performance of the described method, additional operations, and/or include the additional elements.

A first station may perform a method comprising one or more operations. The first station may receive, from a second station, a first frame. The first frame may comprise a first indication to distribute an uplink bandwidth for transmission of a short training field (STF) of a physical layer protocol data unit (PPDU). The first station may transmit, to the second station, the PPDU. Based on the first indication, a first spatial stream of the PPDU may carry, via a first set of tones of the uplink bandwidth, a first version of the STF. A second spatial stream of the PPDU may carry, via a second set of tones of the uplink bandwidth, a second version of the STF. The second station may comprise an access point station. The first station may comprise a non-access point station. The first frame may comprise: a beacon frame; an association response frame; a probe response frame; or an authentication response frame. The first frame may comprise a trigger frame. The first indication may be provided in a first user info field of the trigger frame. The first indication may be provided in a common info field of the trigger frame. The trigger frame may comprise a first resource unit (RU) allocated to the first station. The first RU may comprise a distributed RU. The trigger frame may indicate a cyclic shift value, associated with the STF, for the first station. The first station transmitting the PPDU may comprise transmitting the first version of the STF using the cyclic shift value. The first station transmitting the PPDU may comprise transmitting the second version of the STF using the cyclic shift value. The distributing the uplink bandwidth for transmission of the STF may comprise splitting tones of the uplink bandwidth into: the first set of tones of the uplink bandwidth; and the second set of tones of the uplink bandwidth. A first transmit power of the STF may be based on a first tone spacing of the first set of tones of the uplink bandwidth and a second tone spacing of the second set of tones of the uplink bandwidth. The first frame may further comprise a second indication that the first station may use the first transmit power of the STF. The first indication may comprise the second indication. The first transmit power of the STF may be based on a first tone spacing of the tones of the uplink bandwidth. The first station may transmit, to the second station, a second frame. The second frame may indicate a capability of the first station to distribute an uplink bandwidth for transmission of an STF of a PPDU. The receiving of the first frame may be based on the capability. The first set of tones may comprise one of every N tones of the uplink bandwidth, starting from a lowest frequency tone of the uplink bandwidth. The second set of tones may comprise one of every N tones of the uplink bandwidth, starting from a second lowest frequency tone of the uplink bandwidth. N may comprise 2, 3, or 4. The first station may comprise: one or more processors; and memory storing instructions that, when executed by the one or more processors, cause the station to perform the described method, additional operations, and/or include the additional elements. A system may comprise: a first station configured to perform the described method, additional operations, and/or include the additional elements; and a second station configured to transmit the first frame. A computer-readable medium may store instructions that, when executed, cause performance of the described method, additional operations, and/or include the additional elements.

The first station may perform a method comprising one or more operations. The first station may transmit, to a second station, a first frame. The first frame may comprise a first indication to distribute an uplink bandwidth for transmission of a short training field (STF) of a first physical layer protocol data unit (PPDU). The first station may receive the first PPDU from the second station. Based on the first indication, the first station may receive, from the second station: a first spatial stream of the first PPDU and a second spatial stream of the first PPDU. The first spatial stream of the first PPDU may carry, via a first set of tones of the uplink bandwidth, a first version of the STF. The second spatial stream of the first PPDU may carry, via a second set of tones of the uplink bandwidth, a second version of the STF. The first station may comprise an access point station. The second station may comprise a non-access point station. The first frame may comprise: a beacon frame; an association response frame; a probe response frame; or an authentication response frame. The first frame may comprise a trigger frame. The first indication may be provided in a first user info field of the trigger frame. The first indication may be provided in a common info field of the trigger frame. The trigger frame may further comprise a first resource unit (RU) allocated to the second station. The first RU may comprise a distributed RU. The trigger frame may further comprise a second RU allocated to a third station. The second RU may comprise a distributed RU. The trigger frame may comprise a plurality of user info fields. The plurality of user info fields may comprise a first user info field indicating the first RU and a second user info field indicating the second RU. The trigger frame further may indicate a first cyclic shift value, associated with the STF, for the second station. The receiving of the first/second spatial stream may comprise receiving the first/second version of the STF with the first cyclic shift value applied to the STF. The trigger frame may further indicate a second cyclic shift value, associated with the STF, for a third station. The second cyclic shift value may be different than the first cyclic shift value. Based on the first indication, a first station may receive, from a third station, a second PPDU. The second PPDU may comprise: a third spatial stream of the second PPDU and a fourth spatial stream of the second PPDU. The third spatial stream of the second PPDU may carry, via the first set of tones of the uplink bandwidth, a third version of the STF. The fourth spatial stream of the second PPDU may carry, via the second set of tones of the uplink bandwidth, a fourth version of the STF. The receiving of the third/fourth spatial stream may comprise receiving the third/fourth version of the STF with the second cyclic shift value applied to the STF. The distributing the uplink bandwidth for transmission of the STF may comprise splitting tones of the RU into: the first set of tones of the uplink bandwidth; and the second set of tones of the uplink bandwidth. The first station may receive, from the second station, a second frame. The second indication may indicate a capability of the second station to distribute an uplink bandwidth for transmission of an STF of a PPDU. The transmitting of the first frame may be based on the capability. The first set of tones may comprise one of every N tones of the uplink bandwidth, starting from a lowest frequency tone of the uplink bandwidth. The second set of tones may comprise one of every N tones of the uplink bandwidth, starting from a second lowest frequency tone of the uplink bandwidth. N may comprise 2, 3, or 4. The first station may comprise: one or more processors; and memory storing instructions that, when executed by the one or more processors, cause the access point to perform the described method, additional operations, and/or include the additional elements. A system may comprise: a first station configured to perform the described method, additional operations, and/or include the additional elements; and a second station configured to receive the first frame. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs), and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a station from an access point, a trigger frame comprising:
a first indication of an uplink bandwidth; and
a second indication to divide, for transmission of a short training field (STF) of a physical layer protocol data unit (PPDU), the uplink bandwidth; and
based on the second indication, transmitting, by the station to the access point:
a first spatial stream comprising a first version of the STF via a first set of tones of the uplink bandwidth, wherein the first version of the STF uses a first cyclic shift diversity value; and
a second spatial stream comprising a second version of the STF via a second set of tones of the uplink bandwidth, wherein the second version of the STF uses the first cyclic shift diversity value.

2. The method of claim 1, wherein a first transmit power of the STF is based on a first tone spacing of the first set of tones of the uplink bandwidth and a second tone spacing of the second set of tones of the uplink bandwidth.

3. The method of claim 1 or claim 2, wherein the second indication is provided in a first user info field of the trigger frame.

4. The method of any one of claims 1 to 3, wherein the second indication is provided in a common info field of the trigger frame.

5. The method of any one of claims 1 to 4, wherein the first set of tones comprise odd tones and the second set of tones comprise even tones, or the first set of tones comprise even tones and the second set of tones comprise odd tones.

6. The method of any one of claims 1 to 5, further comprising transmitting, by the station to the access point, a second frame indicating a capability of the station to divide the uplink bandwidth for transmission of the STF of the PPDU.

7. The method of any one of claims 1 to 6, wherein the first set of tones comprises one of every N tones of the uplink bandwidth, starting from a lowest frequency tone of the uplink bandwidth.

8. The method of any one of claims 1 to 7, wherein the second set of tones comprises one of every N tones of the uplink bandwidth, starting from a second lowest frequency tone of the uplink bandwidth.

9. The method of any one of claims 1 to 8, wherein the trigger frame comprises a first resource unit (RU) allocated to the station.

10. The method of any one of claims 1 to 9, wherein the trigger frame further comprises a second RU allocated to the access point.

11. The method of any one of claims 1 to 10, further comprising transmitting, by the station to the access point and based on the second indication, a second PPDU comprising:
a third spatial stream of the second PPDU comprising a third version of the STF via the first set of tones of the uplink bandwidth; and
a fourth spatial stream of the second PPDU comprising a fourth version of the STF via the second set of tones of the uplink bandwidth.

12. The method of any one of claims 1 to 11, wherein the trigger frame further comprises a third indication that the station is to use the first transmit power of the STF.

13. A computing device comprising:
one or more processors; and
memory storing instructions that, when executed by the one or more processors, cause the computing device to perform the method of any one of claims 1 to 12.

14. A system comprising:
a station configured to perform the method of any one of claims 1 to 12; and
an access point configured to transmit the trigger frame.

15. A computer-readable medium storing instructions that, when executed, cause performance of the method of any one of claims 1 to 12.
